(19) Europäisches Patentamt
European Patent Office
Office européen des brevets

(11) EP 0 850 203 B2

(12) # NOUVEAU FASCICULE DE BREVET EUROPEEN
Après la procédure d'opposition

(45) Date de publication et mention de la décision concernant l'opposition:
**04.01.2012 Bulletin 2012/01**

(45) Mention de la délivrance du brevet:
**17.01.2001 Bulletin 2001/03**

(21) Numéro de dépôt: **96931129.9**

(22) Date de dépôt: **13.09.1996**

(51) Int Cl.:
***C03C 17/00*** *(2006.01)* ***C03C 8/20*** *(2006.01)*
***C03C 17/34*** *(2006.01)* ***C09D 1/00*** *(2006.01)*
***C09D 17/00*** *(2006.01)* ***C04B 41/50*** *(2006.01)*

(86) Numéro de dépôt international:
**PCT/FR1996/001419**

(87) Numéro de publication internationale:
**WO 1997/010185 (20.03.1997 Gazette 1997/13)**

(54) **SUBSTRAT A REVETEMENT PHOTOCATALYTIQUE A BASE DE DIOXYDE DE TITANE ET DISPERSIONS ORGANIQUES A BASE DE DIOXYDE DE TITANE**

SUBSTRAT MIT EINER PHOTOKATALYTISCHEN BESCHICHTUNG VON TITANDIOXYD UND ORGANISCHE DISPERSIONEN MIT TITANDIOXYD

TITANIUM DIOXIDE-BASED PHOTOCATALYTIC COATING SUBSTRATE, AND TITANIUM DIOXIDE-BASED ORGANIC DISPERSIONS

(84) Etats contractants désignés:
**AT BE CH DE DK ES FI FR GB IE IT LI LU NL PT SE**

(30) Priorité: **15.09.1995 FR 9510936**
**15.09.1995 FR 9510838**

(43) Date de publication de la demande:
**01.07.1998 Bulletin 1998/27**

(73) Titulaires:
- **RHODIA CHIMIE**
**92512 Boulogne Billancourt Cedex (FR)**
- **SAINT-GOBAIN GLASS FRANCE**
**92400 Courbevoie (FR)**

(72) Inventeurs:
- **CHOPIN, Thierry**
**F-95320 Saint-Leu-la-Foret (FR)**
- **DUPUIS, Dominique**
**F-95170 Deuil-la-Barre (FR)**
- **LEHAUT, Corinne**
**F-75011 Paris (FR)**
- **CHARTIER, Pascal**
**F-91400 Orsay (FR)**
- **TALPAERT, Xavier**
**F-75020 Paris (FR)**

(74) Mandataire: **Kling, Simone et al**
**Cabinet Lavoix**
**2, place d'Estienne d'Orves**
**75441 Paris Cedex 09 (FR)**

(56) Documents cités:
**EP-A- 0 544 577** **EP-A- 0 581 216**
**EP-A1- 0 684 075** **FR-A- 2 681 534**
**US-A- 4 041 194**

- **DATABASE WPI Week 23 Derwent Publications Ltd., London, GB; AN 88-158890 XP002005574 & JP,A,63 100 042 (NIPPON SHEET GLASS KK) , 2 Mai 1988**
- **JOURNAL OF MATERIALS SCIENCE, vol. 24, no. 1, Janvier 1989, LONDON GB, pages 243-246, XP000046035 M.TAKAHASHI ET AL.: "pt-tio2 thin films on glass substrates as efficient photocatalysts"**
- **CHEMICAL ABSTRACTS, vol. 116, no. 10, 9 Mars 1992 Columbus, Ohio, US; abstract no. 89812a, page 396; XP000405429 & SU,A,1 663 046 (SCIENTIFIC RESEARCH INSTITUTE OF PHYSICAL CHEMICAL PROBLEMS MINSK) 15 Juillet 1991**
- **CHEMICAL ABSTRACTS, 29 Mai 1995, Columbus, Ohio, US; NOBUAKI NEGISHI ET AL.: 'Preparation of Transparent Ti02 Thin Film Photocatalyst ...' page 841-842;**

Remarques:
Le dossier contient des informations techniques présentées postérieurement au dépôt de la demande et ne figurant pas dans le présent fascicule.

EP 0 850 203 B2

**Description**

La présente invention concerne des substrats munis d'un revêtement à propriété photocatalytique à base de dioxyde de titane, ledit dioxyde de titane étant incorporé en partie sous forme de particules. Elle concerne aussi un procédé de préparation de ces substrats et de nouvelles dispersions organiques à base de particules de dioxyde de titane monodisperses utilisables dans ce procédé.

Il est connu de fonctionnaliser les matériaux d'applications diverses, comme les matériaux pour véhicules ou pour bâtiments (verres, métaux, céramiques, matériaux de façade, de bardage, de toiture tels que les tuiles, ...) en leur conférant des propriétés telles que notamment des propriétés anti-UV, anti-salissure, bactéricide, anti-reflet, anti-statique, anti-micro-organisme, ....

Ceci est particulièrement vrai dans le cas des vitrages, comme les vitrages de pare-brise pour les moyens de transport, que l'on cherche à fonctionnaliser en déposant à leur surface des couches minces destinées à leur conférer une propriété particulière selon l'application visée.

Ainsi, il existe des couches à fonction optique, comme les couches dites anti-reflet composées d'un empilement de couches alternativement à haut et bas indices de réfraction. Pour une fonction anti-statique, ou chauffante du type anti-givre, on peut ainsi prévoir des couches minces conductrices électriquement, par exemple à base de métal ou d'oxyde métallique dopé. Pour une fonction thermique, de bas-émissivité ou anti-solaire par exemple, on peut se tourner vers des couches minces en métal du type argent ou à base de nitrure ou d'oxyde métallique. Pour obtenir un effet "anti-pluie", peuvent être prévues des couches à caractère hydrophobe, par exemple à base d'organosilane fluoré, ...

Aujourd'hui, une autre propriété recherchée est d'obtenir la permanence dans le temps des propriétés d'aspect et de surface, permettant notamment d'espacer les nettoyages et/ou d'améliorer la visibilité, en parvenant à éliminer au fur et à mesure les salissures se déposant progressivement à la surface du substrat, notamment les salissures d'origine organique, comme les traces de doigts ou des produits organiques volatils présents dans l'atmosphère, ou même des salissures de type buée.

Une solution à ces problèmes de salissures consiste, par exemple, à déposer sur les substrats un revêtement assurant une dégradation de ces salissures par photocatalyse. Sous l'effet d'un rayonnement de longueur d'onde adéquate, les composants du revêtement initient des réactions radicalaires provoquant l'oxydation de produits organiques.

Cette dégradation peut être induite par tout composé générant des radicaux sous l'action de la lumière (effet photocatalytique). Il peut s'agir en particulier du dioxyde de titane qui est déjà employé pour le traitement des substrats architecturaux et surtout les substrats en verre.

Ainsi, il est connu d'utiliser des solutions de composés du titane ou des dispersions colloïdales de dioxyde de titane pour créer des propriétés photocatalytiques sur les substrats (voir par exemple EP-A-581216). Cependant, on a constaté que les caractéristiques spécifiques desdites solutions de composés de titane ou dispersions colloïdales de dioxyde de titane utilisées pour traiter le substrat influencent la qualité du revêtement photocatalytique. Selon ces caractéristiques spécifiques, la qualité de l'adhésion du revêtement sur le substrat peut également être très variable. Enfin, il arrive, dans le cas où le substrat est du verre, que le revêtement induise un manque de transparence et un flou sur le verre.

Un but de la présente invention est donc de proposer de nouveaux substrats possédant un revêtement à base de dioxyde de titane présentant de bonnes propriétés photocatalytiques, lesdits revêtements étant durables, transparents et pouvant être préparés industriellement.

Dans ce but, l'invention concerne un substrat tel que défini dans la revendication 1.

L'invention concerne également des procédés d'obtention de ce substrat qui consiste à déposer le revêtement par pyrolyse en phase liquide ou par une technique dite de sol-gel à partir d'une suspension comprenant au moins un composé organométallique et une dispersion de particules de dioxyde de titane, lesdites particules présentant les caractéristiques des particules incorporées au revêtement final.

Enfin, l'invention concerne une dispersion organique telle que définie dans la revendication 23.

D'autres avantages de l'invention apparaîtront plus clairement à la lecture de la description, des exemples et des figures suivantes :

. figure 1 : coupe transversale d'un substrat muni du revêtement selon l'invention,
. figure 2 : schéma d'une technique de dépôt sol-gel, dite "par trempé" ou par "dip-coating" du revêtement,
. figure 3 : schéma d'une technique de dépôt dite "cell-coating",
. figure 4 : schéma d'une technique de dépôt dite "spray-coating",
. figure 5 : schéma d'une technique de dépôt par enduction laminaire.

Globalement, le dioxyde de titane du revêtement, sous forme de particules ou non, est partiellement cristallisé sous forme cristalline anatase, rutile ou sous forme d'un mélange d'anatase et de rutile avec un taux de cristallisation de préférence d'au moins 25 %, notamment d'environ 30 à 80 %. Le taux de cristallisation représente la quantité en

poids de $TiO_2$ cristallisé par rapport à la quantité en poids totale de $TiO_2$ dans le revêtement.

Pour les particules de dioxyde de titane du revêtement, la nature de la phase cristalline est majoritairement la forme cristalline anatase. "Majoritairement" signifie que le taux d'anatase des particules de dioxyde de titane du revêtement est supérieur à 50 % en masse. De préférence, les particules du revêtement présentent un taux d'anatase supérieur à 80 %.

Le taux de cristallisation et la nature de la phase cristalline sont mesurés par diffraction RX.

Les particules de dioxyde de titane cristallisé incorporées dans le revêtement présentent une taille moyenne comprise entre 5 à 80 nm, de préférence comprise entre 5 et 70 nm, encore plus préférentiellement comprise entre 10 et 50 nm. Les diamètres sont mesurés par microscopie électronique par transmission (MET).

Les particules de dioxyde de titane sont incorporées dans le revêtement à l'aide d'un liant.

Le liant incorporant les particules au revêtement est minéral et se présente sous forme d'un oxyde (ou mélange d'oxydes) amorphe ou partiellement cristallisé, par exemple en oxyde de silicium, de titane, d'étain, de zirconium ou d'aluminium. Il peut être cantonné à son rôle de matrice vis-à-vis des particules de dioxyde de titane, ce qui est le cas de l'oxyde de silicium. Mais, il peut aussi participer à l'effet photocatalytique des particules, en présentant lui-même un certain effet photocatalytique, même faible par rapport à celui des particules, ce qui est le cas du dioxyde de titane amorphe ou partiellement cristallisé.

On peut aussi choisir de superposer au revêtement selon l'invention une couche oléophobe et/ou hydrophobe greffée, par exemple à base de l'organosilane fluoré décrit dans les brevets US-A-5 368 892 et US-A-5 389 427, ainsi qu'à base de perfluoroalkylsilane décrit dans la demande de brevet EP-A-692 463, notamment de formule :

$$CF_3-(CF_2)_n-(CH_2)_m-SiX_3,$$

avec n de 0 à 12, m de 2 à 5, X est une fonction hydrolysable.

Grâce aux particules de dioxyde de titane incorporées au revêtement, ce dernier peut présenter un indice de réfraction compris entre 1,40 et 2,35, de préférence compris entre 1,6 et 2,3. Ceci est dû au fait que les particules de dioxyde de titane sont poreuses et présentent ainsi un indice de réfraction plus faible que le dioxyde de titane massif. Le revêtement obtenu présente donc un indice de réfraction faible par rapport aux indices de réfraction des revêtements à base de dioxyde de titane massif.

L'avantage optique lié à l'obtention de faibles indices est très important dans le cas des substrats à base de verre : une couche de fort indice de dioxyde de titane massif conduit à augmenter la réflexion lumineuse du verre porteur, donc à diminuer sa transmission lumineuse. Or, pour certaines applications, notamment dans le domaine des vitrages équipant des véhicules, il est indispensable d'avoir des niveaux de transmission lumineuse élevés (pour un pare-brise, une transmission lumineuse minimale de 75 % est nécessaire).

Pour amplifier l'effet photocatalytique des particules de dioxyde de titane du revêtement selon l'invention, lesdites particules peuvent comprendre des catalyseurs et des additifs permettant de mieux filtrer les U.V., ou de décaler la bande d'absorption vers le visible, ou encore des métaux permettant de doper le dioxyde de titane afin notamment d'augmenter le nombre de porteurs électroniques. Plusieurs variantes permettent d'amplifier cet effet.

Selon une première variante, au moins une partie des particules de dioxyde de titane du revêtement peuvent comprendre dans leur réseau cristallin des ions métalliques choisis parmi le fer, le cuivre, le ruthénium, le molybdène, le bismuth, le tantale, le niobium, le cobalt, le nickel, le vanadium. Le rapport de la masse de ces ions par rapport à la masse des particules de dioxyde de titane est, en général, compris entre 0,01 et 10 %.

Selon une deuxième variante, au moins une partie des particules de dioxyde de titane peuvent être recouvertes au moins en partie d'une couche d'oxydes ou de sels métalliques, le métal étant choisi parmi le fer, le cuivre, le ruthénium, le cérium, le molybdène, le bismuth, le tantale, le niobium, le cobalt, le nickel, le vanadium, le tungstène, l'étain, le zirconium, le cadmium, le zinc. Le rapport de la masse de ces métaux par rapport à la masse des particules de dioxyde de titane est généralement compris entre 0,01 et 20 %.

Selon une troisième variante, au moins une partie des particules de dioxyde de titane peuvent être recouvertes au moins en partie d'une couche de métal choisi parmi le platine, l'argent ou le rhodium. Le rapport de la masse de ces métaux par rapport à la masse des particules de dioxyde de titane peut être compris entre 0,01 et 5 %.

Selon une quatrième variante, le revêtement selon l'invention comprend, en plus des particules de dioxyde de titane, des particules additives à base de composés métalliques choisi parmi le cadmium, l'étain, le tungstène, le zinc, le cérium ou le zirconium. Ces particules sont de taille colloïdale, en général, comprise entre 5 et 100 nm. Le rapport de la masse de ces particules par rapport à la masse des particules de dioxyde de titane est généralement compris entre 0,01 et 20 %.

Ces particules additives peuvent être composées des oxydes ou des sulfures métalliques, tels que $CeO_2$, $SnO_2$, $WO_3$, ZnO, $ZrO_2$ ou $CdSe_xS_y$ avec x et y compris entre 0 et 1, et x + y = 1.

L'épaisseur du revêtement du substrat selon l'invention est variable. Elle est comprise entre 5 nm et 1 micron, de préférence entre 5 nm et 100 nm, encore plus préférentiellement entre 5 et 80 nm, voire entre 10 et 80 nm ; elle peut

par exemple être comprise entre 20 et 50 nm. En fait, l'épaisseur peut dépendre de différents paramètres. Elle peut dépendre de l'application envisagée du substrat, ou encore de la taille des particules de dioxyde de titane dans le revêtement. Le revêtement peut également être choisi de surface plus ou moins lisse : une certaine rugosité peut, en effet, être avantageuse, si elle permet de développer une surface photocatalytique active plus grande. Cependant, trop prononcée, elle peut être pénalisante en favorisant l'incrustation des salissures. Dans le cas où le revêtement est à base de particules de dioxyde de titane incorporées dans un liant, on peut choisir le mode de dépôt et l'épaisseur de revêtement de telle sorte que les particules ou les cristallites dont elles sont constituées "émergent" en surface de ce liant.

Le substrat selon l'invention est un substrat à base verrière.

Entre le substrat et le revêtement selon l'invention, on peut déposer une ou plusieurs autres couches minces à fonctions différentes ou complémentaires de celle du revêtement à base de dioxyde de titane. Il peut s'agir, notamment, de couches à fonction anti-statique, thermique, optique, ou de couches faisant barrière à la migration de certains éléments provenant du substrat, par exemple faisant barrière aux alcalins et tout particulièrement aux ions sodium. On peut envisager un empilement de couches "anti-reflets" alternant des couches minces à haut et bas indices, le revêtement de l'invention constituant la dernière couche de l'empilement. Dans ce cas, il est préférable que le revêtement soit d'indice de réfraction relativement faible 10, ce qui est le cas lorsqu'il est constitué d'une matrice minérale du type oxyde de silicium dans laquelle sont noyées des particules de dioxyde de titane, ou d'un oxyde mixte de titane et de silicium.

La couche à fonction anti-statique et/ou thermique (chauffante en la munissant d'amenées de courant, bas-émissive, anti-solaire, ...) peut notamment être choisie à base d'un matériau conducteur du type métal, comme l'argent, ou du type oxyde métallique dopé comme l'oxyde d'indium dopé à l'étain ITO, l'oxyde d'étain dopé avec un halogène de type fluor $SnO_2$:F, ou de l'oxyde de zinc dopé à l'indium ZnO:In, au fluor ZnO:F, à l'aluminium ZnO:Al ou à l'étain ZnO:Sn.

Une telle couche peut être obtenue par pyrolyse de poudre à partir de difluorure de dibutyl étain DBTF, ou par pyrolyse en phase liquide ou vapeur, comme cela est décrit dans la demande de brevet EP-A-648 196. En phase vapeur, on peut notamment utiliser un mélange de monobutyl chlorure d'étain et d'un précurseur fluoré associé éventuellement à un oxydant "doux" du type $H_2O$.

La couche à fonction anti-statique a de préférence une valeur de résistance carrée de 20 à 1000 ohms/carré. On peut prévoir de la munir d'amenées de courant afin de la polariser (tensions d'alimentations par exemple comprises entre 5 et 100 V). Cette polarisation contrôlée permet de lutter contre le dépôt de poussières de taille de l'ordre du millimètre susceptibles de se déposer sur le revêtement, notamment des poussières sèches adhérentes par effet électrostatique : en inversant brutalement la polarisation de la couche, on "éjecte" ces poussières.

La couche mince à fonction optique peut être choisie afin de diminuer la réflexion lumineuse et/ou rendre plus neutre la couleur en réflexion du substrat. Elle présente dans ce cas, de préférence, un indice de réfraction intermédiaire entre celui du revêtement et celui du substrat et une épaisseur optique appropriée et peut être constituée d'un oxyde ou d'un mélange d'oxydes du type $Al_2O_3$, $SnO_2$, $In_2O_3$, ou d'oxycarbure ou oxynitrure de silicium.

Pour obtenir une atténuation maximale de la couleur en réflexion, il est préférable que cette couche mince présente un indice de réfraction proche de la racine carrée du produit des carrés des indices de réfraction des deux matériaux qui l'encadrent, c'est-à-dire le substrat et son revêtement. Parallèlement, il est avantageux de choisir son épaisseur optique (i.e. le produit de son épaisseur géométrique et de son indice de réfraction) voisine de $\lambda$ / 4, $\lambda$ étant approximativement la longueur d'onde moyenne dans le visible, notamment d'environ 500 à 550 nm.

De préférence, le revêtement à base de dioxyde de titane constitue la dernière couche d'un empilement de couches anti-reflets.

La couche mince à fonction de barrière aux alcalins peut être choisie à base d'oxyde, de nitrure, d'oxynitrure ou d'oxycarbure de silicium, d'oxyde d'aluminium contenant du fluor $Al_2O_3$:F, ou encore de nitrure d'aluminium. Elle s'est avérée utile quand le substrat est en verre, car la migration d'ions sodium dans le revêtement à base de dioxyde de titane peut, dans certaines conditions, en altérer les propriétés photocatalytiques.

Toute ces couches minces optionnelles peuvent, de manière connue, être déposées par des techniques sous vide du type pulvérisation cathodique ou par d'autres techniques du type décomposition thermique telles que les pyrolyses en phase solide, liquide ou gazeuse. Chacune des couches prémentionnées peut cumuler plusieurs fonctions, mais on peut aussi les superposer. Une telle couche peut être obtenue par CVD ("Chemical Vapor Deposition") à partir d'un mélange de $SiH_4$ et d'éthylène en dilution dans de l'azote, comme décrit dans la demande de brevet EP-A-518 755.

De manière tout à fait surprenante, le substrat selon l'invention présente en fait non pas une propriété mais deux, dès qu'il est exposé à un rayonnement adéquat comme la lumière visible et/ou les ultraviolets : par la présence de dioxyde de titane photocatalytique, il favorise la disparition progressive des salissures d'origine organique, en provoquant leur dégradation par un processus d'oxydation radicalaire.

Le substrat selon l'invention peut présenter également une surface extérieure à caractère hydrophile et/ou oléophile prononcé ce qui amène deux avantages non négligeables. Tout d'abord, le caractère hydrophile permet un mouillage parfait du revêtement par l'eau : au lieu d'un dépôt de gouttelettes sous forme de buée gênant la visibilité, on observe, en fait, un mince film continu d'eau tout à fait transparent qui se forme à la surface du substrat. Cet effet anti-buée peut être contrôlé par la mesure d'un angle de contact à l'eau inférieur à 5 ° après exposition à la lumière.

Conjointement au caractère hydrophile, le substrat selon l'invention peut également présenter un caractère oléophile permettant le mouillage des salissures organiques, qui comme pour l'eau, ont tendance alors à se déposer sur le substrat sous forme d'un film continu moins visible que des "tâches" bien localisées. On obtient ainsi un effet "anti-salissures organiques" qui opère en deux temps : dès qu'elle se dépose sur le substrat, la salissure est déjà peu visible car elle s'étale ; et, ensuite, progressivement, elle disparaît par dégradation radicalaire amorcée par photocatalyse.

L'invention vise particulièrement les vitrages "anti-salissures" et/ou "anti-buée", qu'ils soient monolithiques, multiples du type double-vitrage ou feuilletés, plats ou bombés, incorporant les substrats précédemment décrits.

Ces vitrages trouvent des applications dans le bâtiment, par exemple pour la préparation des double-vitrages (on peut disposer le revêtement côté extérieur et/ou côté intérieur, i.e. en face 1 et/ou en face 4). Cela s'avère tout particulièrement intéressant pour les vitrages peu accessibles au nettoyage et/ou qui ont besoin d'être nettoyés très fréquemment, comme des vitrages de toiture, des vitrages d'aéroport, ... Il peut aussi s'agir de vitrages pour véhicules où le maintien de la visibilité est un critère essentiel de sécurité. Ce revêtement peut ainsi être déposé sur des pare-brise, latéraux ou lunettes arrière de voiture, notamment sur la face des vitrages tournée vers l'intérieur de l'habitacle. Ce revêtement peut alors éviter la formation de buée, et/ou supprimer les traces de salissures du type traces de doigts, nicotine ou matériaux organiques du type plastifiant volatil relargué par le plastique habillant l'intérieur de l'habitacle, surtout celui du tableau de bord (relargage connu parfois sous le terme anglais de "fogging").

Nombre d'autres applications sont possibles, notamment pour les verres d'aquarium, de vitrine, de serres, d'ameublement d'intérieur, de mobilier urbain, ou les miroirs, écrans de télévision, vitrages à absorption variable commandée électriquement.

Une autre application intéressante du revêtement selon l'invention consiste à l'associer à un vitrage à absorption variable commandée électriquement du type vitrage électrochrome, vitrage à cristaux liquides éventuellement avec colorant dichroïque, vitrage à système de particules suspendues, vitrage viologène, ... Tous ces vitrages étant constitués en général d'une pluralité de substrats transparents entre lesquels sont disposés les éléments "actifs", on peut alors avantageusement disposer le revêtement sur la face extérieure d'au moins un de ces substrats.

Notamment dans le cas d'un vitrage électrochrome, lorsque ce dernier est à l'état coloré, son absorption conduit à un certain échauffement en surface, ce qui, de fait, est susceptible d'accélérer la décomposition photocatalytique des substances carbonées se déposant sur le revêtement à base de dioxyde de titane. Pour plus de détails sur la structure d'un vitrage électrochrome, on se reportera avantageusement à la demande de brevet EP-A-575 207 décrivant un double vitrage feuilleté électrochrome, le revêtement à base de dioxyde de titane pouvant, de préférence, être disposé en face 1.

L'invention a également pour objet les différents procédés de préparation des substrats précédemment décrits.

Selon un premier mode, le procédé d'obtention du substrat consiste à déposer le revêtement, par pyrolyse en phase liquide, à partir d'une dispersion comprenant au moins un composé organométallique et des particules de dioxyde de titane, lesdites particules présentant les caractéristiques des particules incorporées au revêtement final précédemment décrit.

La technique de dépôt par pyrolyse est intéressante car elle permet le dépôt du revêtement en continu, directement sur le ruban de verre float.

Selon un deuxième mode, le procédé d'obtention du substrat consiste à déposer le revêtement par une technique de sol-gel, avec un mode de dépôt du type trempé (ou "dip-coating"), "cell-coating", enduction laminaire ou "spray-coating", à partir d'une dispersion comprenant au moins un composé organométallique et des particules de dioxyde de titane, lesdites particules présentant les caractéristiques des particules incorporées au revêtement final précédemment décrit.

Le principe de la technique dite sol-gel, utilisant un mode de dépôt par "trempé", ressort de la figure 2 : il s'agit d'immerger le substrat (1) dans la dispersion liquide (4) contenant le(s) composant(s) adéquat(s) du revêtement (3), puis d'en extraire le substrat (1) à vitesse contrôlée à l'aide d'un moyen moteur (5). Le choix de la vitesse d'extraction permet d'ajuster l'épaisseur de solution restant à la surface des deux faces du substrat et, de fait, l'épaisseur du revêtement déposé après traitement thermique de ce dernier. Ce traitement vise à la fois à évaporer le solvant, à décomposer le ou les composé(s) organométallique(s) en oxyde(s) et à assurer la tenue mécanique du revêtement.

La technique de cell-coating ressort de la figure 3. Il s'agit de former une cavité étroite délimitée par deux faces sensiblement parallèles (6) et (7), et deux joints (8) et (9), au moins une de ces faces (6), (7), étant constituée par la face du substrat (1) à traiter. On remplit la cavité de la dispersion comprenant le(s) composé(s) organométallique(s) et les particules, et on retire la solution de manière contrôlée, de façon à former un ménisque de mouillage à l'aide d'une pompe (10) péristaltique par exemple, en laissant un film de la solution sur la face du substrat (1) au fur et à mesure du retrait de la solution. La cavité (5) est ensuite maintenue au moins le temps nécessaire à un séchage et au durcissement par traitement thermique du film sur le substrat. L'avantage de cette technique par rapport au "dip-coating" est notamment que l'on peut traiter qu'une seule des deux faces du substrat (1), et non systématiquement les deux, à moins d'avoir recours à un système de masquage.

La technique de "spray coating" est détaillée sur la figure 4. Elle consiste à pulvériser la dispersion (4) comprenant le(s) composé(s) organométallique(s) et des particules sous forme d'un nuage contre le substrat (1) en statique.

La technique d'enduction laminaire est illustrée sur la figure 5. Elle consiste à faire passer le substrat (1), maintenu par succion sous vide, contre un support (11) en inox et Téflon au-dessus d'un réservoir (12) contenant la dispersion comprenant de(s) composé(s) organométallique(s) et les particules, solution dans laquelle est partiellement immergé un cylindre (14) fendu. On déplace ensuite l'ensemble du réservoir (12) et du cylindre (14) sur toute la longueur du substrat (1), le masque (13) évitant une évaporation trop rapide du solvant de la solution (4). Pour plus de détails sur cette technique, on peut se reporter à l'enseignement de la demande de brevet WO 94/01598.

Selon ce deuxième mode, le(s) composé(s) organométallique(s) est décomposée thermiquement après enduction du substrat par la solution sur une ou deux de ces faces.

Les deux modes précédemment décrits ont recours à une dispersion à base de composé(s) organométallique (s) et de particules de dioxyde de titane déjà formées et cristallisées.

Les composés organométalliques sont des composés dont l'atome métallique M peut être choisi parmi le titane, le silicium, l'étain, le zirconium, l'aluminium ...

Il peut s'agir de composés organométalliques de formule générale $M(OR)_4$ dans laquelle M représente le métal choisi parmi, par exemple, le titane, le silicium, l'étain, le zirconium ou l'aluminium, et R un radical alkyle, cycloalkyle, aryle, alkylaryle ou arylakyle, alcényle ou alcynyle, un radical acétylacétonate ou un de ses dérivés (méthylacétoacétate, éthylacétoacétate, acétylacétonate de titane...) , un radical aminé ou un de ses dérivés (titane tri-éthanolamine, titane di-éthanolamine, ...), un glycolate (tétra-octylène glycolate de titane), ...

On préfère les composés du type titanates ou silicates.

Le composé organométallique tétraisopropoxytitane convient notamment en tant que composé organométallique. Les composés organométalliques du titane préférés sont du type chélate de titane et/ou alcoolate de titane, ils peuvent être du type de ceux décrits dans les demandes de brevets FR-A-2 310 977 et EP-A-465 309. Ainsi, les composés organométalliques du titane peuvent être choisis parmi les composés de formule $R_nTi(OR')_p$ avec :

- p compris entre 1 et 4,
- n = 4 - p,
- R radical alkyl en $C_1$ à $C_{18}$,
- R' radical alkyl en $C_1$ - $C_4$ du type méthyl, éthyl ou isobutyl.

Les composés organométalliques du silicium préférés peuvent être choisis parmi les composés de formule $R_nSi(OR')_p$ avec :

- p compris entre 1 et 4,
- n = 4 - p,
- R radical alkyl en $C_1$ à $C_{18}$,
- R' radical alkyl en $C_1$ - $C_4$ du type méthyl, éthyl ou isobutyl.

Les composés préférés sont le tétraméthylorthosilicate (TMOS), ie tétraéthylorthosilicate (TEOS) et $(CH_3)_2Si(OC_2H_5)_2$.

Il est bien sûr possible de mettre en oeuvre des mélanges de ces composés.

Les particules présentent, elles, les caractéristiques évoquées plus haut en taille, taux de cristallinité et éventuellement dopage par des composés métalliques.

La dispersion comprend en général 5 à 90 % en poids de composés organométalliques exprimés en oxydes métalliques ($MO_x$) par rapport au poids de $TiO_2$ apporté par les particules et de composés organométalliques exprimés en oxydes métalliques ($MO_x$), de préférence 15 à 80 %, encore plus préférentiellement de 20 à 75 %.

Après dépôt et traitement thermique, le revêtement peut contenir, à la fois, du dioxyde de titane provenant de la décomposition des composés organométalliques, s'ils sont à base de titane, et des particules de dioxyde de titane de la dispersion, le premier jouant, en quelque sorte, le rôle de liant minéral par rapport au second.

Les particules sont hautement réactives sur le plan photocatalytique et peuvent en outre favoriser la cristallisation du dioxyde de titane formé par décomposition thermique à partir des composés organométalliques à base de titane, en jouant vraisemblablement le rôle de germes de cristallisation. Dans le revêtement final, on a ainsi du dioxyde de titane de deux origines différentes.

Il est préférable d'utiliser des particules de dioxyde de titane monodisperses afin d'obtenir des revêtements transparents. On entend par monodisperses des particules présentant un indice de dispersion d'au plus 0,5, de préférence d'au plus 0,3, l'indice de dispersion étant donné par la formule suivante :

$$I = \frac{\varnothing_{84} - \varnothing_{16}}{2\varnothing_{50}}$$

dans laquelle :

- $\varnothing_{84}$ est le diamètre des particules pour lequel 84% des particules ont un diamètre inférieur à $\varnothing_{84}$,
- $\varnothing_{16}$ est le diamètre des particules pour lequel 16% des particules ont un diamètre inférieur à $\varnothing_{16}$,
- $\varnothing_{50}$ est le diamètre moyen des particules.

Il peut être intéressant, par ailleurs, de déposer le revêtement, quelle que soit la technique de dépôt envisagée, non pas en une seule fois, mais par au moins deux étapes successives, ce qui paraît favoriser la cristallisation du dioxyde de titane sur toute l'épaisseur du revêtement lorsqu'on le choisit relativement épais.

De même, il peut être avantageux de faire subir au revêtement, après l'avoir déposé, au moins un traitement thermique du type recuit.

Ce traitement thermique du type recuit est notamment indispensable si le revêtement a été déposé par une technique du type sol-gel ou enduction laminaire, selon le deuxième mode décrit précédemment, afin de décomposer le(s) composé(s) organométallique(s) en dioxyde, une fois l'enduction du substrat effectuée.

Par contre, ce traitement thermique du type recuit n'est pas indispensable dans le cas où on dépose le revêtement par une technique de pyrolyse, selon le premier mode décrit précédemment, où le composé organométallique se décompose dès qu'il se trouve au contact du substrat. Cependant, pour le premier comme le second mode, un traitement thermique post-dépôt, une fois le dioxyde de titane formé, améliore le taux de cristallisation et l'adhésion. La température de traitement choisie peut en outre permettre de mieux contrôler le taux de cristallisation et la nature cristalline.

Ce recuit consiste, en général, à faire introduire le substrat dans un four à une température d'environ 500 à 550 °C pendant un laps de temps pouvant aller de 1 minute à 3 heures.

Pour les deux modes, une couche barrière aux alcalins peut être utile entre le substrat et le revêtement, tout particulièrement si le revêtement doit subir un traitement thermique relativement long et/ou à haute température, car la migration des alcalins provenant du verre sous l'effet de la chaleur dans le revêtement, en trop grande quantité, peut être néfaste à l'activité photocatalytique. C'est également le cas si le revêtement est choisi relativement mince, notamment lorsqu'il présente une épaisseur de moins de 20 nm.

Tout type de dispersion de dioxyde de titane dont les particules présentent les caractéristiques recherchées pour le substrat, notamment en taille et cristallinité, est utilisable, que la phase liquide soit aqueuse ou organique. Cependant, une phase organique est préférée.

Enfin, l'invention concerne une dispersion organique telle que définie dans la revendication 23.

La notion de monodispersité est la même que celle définie précédemment.

Les particules de dioxyde de titane présentent les mêmes caractéristiques de taille et de cristallinité que les particules du revêtement du substrat selon l'invention décrit ci-dessus.

Ainsi, les particules de dioxyde de titane de la dispersion présentent une taille comprise entre 5 et 80 nm en général, de préférence comprise entre 5 et 70 nm, encore plus préférentiellement comprise entre 10 et 50 nm. La taille est mesurée par MET.

En outre, la nature de la phase cristalline de ces particules de dioxyde de titane est majoritairement sous forme cristalline anatase. "Majoritairement" signifie que le taux d'anatase des particules de dioxyde de titane de la dispersion selon l'invention est supérieur à 50 % en masse. De préférence, les particules des dispersions utilisées présentent un taux d'anatase supérieur à 80 %.

Pour la phase liquide, de préférence, le solvant organique présente une chaleur latente de vaporisation inférieure à celle de l'eau. On entend par chaleur latente de vaporisation le nombre de calories nécessaires pour vaporiser 1 g de liquide à la température d'ébullition dudit liquide. La chaleur latente de vaporisation de l'eau à sa température d'ébullition est de 540 cal/g (Handbook of Chemistry and Physics, 75e ed.). Un tel solvant organique peut être choisi parmi les alcools (éthanol, isopropanol, ...) et en particulier les glycols (éthylène glycol), les esters tels que l'acétate d'éthyle, ...

Le taux de dioxyde de titane de la dispersion selon l'invention peut être compris entre 1 g/l et 300 g/l.

Ces dispersions organiques peuvent comprendre selon le type de procédé utilisé pour la préparer une teneur en eau d'au plus 10 % en poids, de préférence d'au plus 5 % et encore plus préférentiellement d'au plus 1 %.

Les particules monodisperses de la dispersion sont, en général, issues d'un procédé de préparation dit en solution ou par voie humide (thermolyse, thermohydrolyse ou précipitation d'un se! de titane) par opposition aux procédés d'oxydation ou de pyrolyse haute température d'un sel de titane. Il peut s'agir par exemple de particules de dioxyde de titane obtenues par le procédé décrit dans la demande EP-A-0 335 773.

Il peut notamment s'agir du procédé de préparation qui consiste à hydrolyser au moins un composé du titane A en présence d'au moins un composé B choisi parmi :

(i) les acides qui présentent :

- soit un groupement carboxyle et au moins deux groupements hydroxyles et/ou amines,
- soit au moins deux groupements carboxyles et au moins un groupement hydroxyle et/ou amine,

(ii) les acides phosphoriques organiques de formules suivantes :

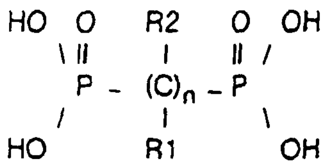

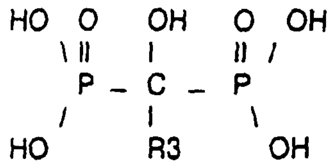

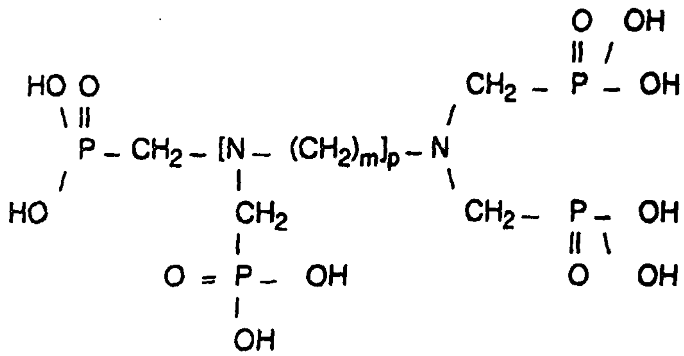

dans lesquelles, n et m sont des nombres entiers compris entre 1 et 6, p est un nombre entier compris entre 0 et 5, R1, R2, R3 identiques ou différents représentant un groupement hydroxyle, amino, aralkyl, aryl, alkyl ou l'hydrogène,

(iii) les composés capables de libérer des ions sulfates en milieu acide,

(iv) les sels des acides décrits ci-dessus,

et en présence de germes de dioxyde de titane anatase présentant une taille d'au plus 5 nm et dans un rapport pondéral exprimé en $TiO_2$ présent dans les germes/titane présent avant introduction des germes dans le milieu d'hydrolyse, exprimé en $TiO_2$ compris entre 0,01 % et 3 %.

Ce procédé de préparation des particules comprend donc plusieurs étapes et, en premier lieu, une étape de préparation de la solution de départ comprenant un composé du titane A, un composé B tel que défini précédemment et des germes de dioxyde de titane.

Cette solution de départ, destinée à être hydrolysée, est de préférence totalement aqueuse ; éventuellement on peut ajouter un autre solvant, un alcool par exemple, à condition que le composé du titane A et le composé B utilisés soient alors substantiellement solubles dans ce mélange.

En ce qui concerne le composé du titane A, on utilise en général un composé choisi parmi les halogénures, les oxyhalogénures, les alcoxydes de titane, les sulfates et plus particulièrement les sulfates synthétiques.

On entend par sulfates synthétiques des solutions de sulfates de titanyle réalisées par échange d'ions à partir de solutions de chlorure de titane très pures ou par réaction d'acide sulfurique sur un alcoxyde de titane.

De préférence, on opère avec des composés du titane du type halogénure ou oxyhalogénure de titane. Les halogénures ou les oxyhalogénures de titane plus particulièrement utilisés dans la présente invention sont les fluorures, les chlorures, les bromures et les iodures (respectivement les oxyfluorures, les oxychlorures, les oxybromures et les oxyiodures) de titane.

Selon un mode particulièrement préféré, le composé du titane est l'oxychlorure de titane $TiOCl_2$.

La quantité de composé de titane A présente dans la solution à hydrolyser n'est pas critique.

La solution initiale contient en outre au moins un composé B tel que défini précédemment. A titre d'exemples non limitatifs de composés B entrant dans le cadre de la présente invention, on peut citer notamment :

- les acides hydroxypolycarboxyliques, et plus particulièrement les acides hydroxydi- ou hydroxytricarboxyliques tels que l'acide citrique, l'acide maléique et l'acide tartrique.
- les acides (polyhydroxy)monocarboxyliques, comme par exemple l'acide glucoheptonique et l'acide gluconique,
- les acides poly(hydroxycarboxyliques), comme par exemple l'acide tartrique,
- les monoacides dicarboxyliques et leurs amides correspondantes, comme par exemple l'acide aspartique, l'asparagine et l'acide glutamique,
- les aminoacides monocarboxyliques, hydroxylés ou non, comme par exemple la lysine, la sérine et la thréonine,
- l'aminotriphosphonate de méthylène, l'éthylènediaminotétraphosphonate de méthylène, le triéthylènetétraaminohexaphosphonate de méthylène, le tétraéthylènepentaaminoheptaphosphonate de méthylène, le pentaéthylènehexaaminooctaphosphonate de méthylène,
- le diphosphonate de méthylène; de 1,1' éthylène; de 1,2 éthylène; de 1,1' propylène; de 1,3 propylène; de 1,6 hexaméthylène; le 2,4 dihydroxypentaméthylène - 2,4 diphosphonate; le 2,5 dihydroxyhexaméthylène - 2,5 disphosphonate ; le 2,3 dihydroxybutylène - 2,3 diphosphonate ; le 1 hydroxybenzyle - 1,1' diphosphonate ; le 1 aminoéthylène 1-1' diphosphonate ; l'hydroxyméthylène diphosphonate ; le 1 hydroxyéthylène 1,1' diphosphonate ; le 1 hydroxypropylène 1-1' diphosphonate ; le 1 hydroxybutylène 1-1' diphosphonate ; le 1 hydroxyhexaméthylène - 1,1' diphosphonate.

Comme déjà indiqué, il est également possible d'utiliser à titre de composé B tous les sels des acides précités. En particulier, ces sels sont soit des sels alcalins, et plus particulièrement des sels de sodium, soit des sels d'ammonium.

Ces composés peuvent être choisis aussi parmi l'acide sulfurique et les sulfates d'ammonium, de potassium,...

De préférence, les composés B tels que définis ci-dessus sont des composés hydrocarbonés de type aliphatique. Dans ce cas, la longueur de la chaîne principale hydrocarbonée n'excède pas de préférence 15 atomes de carbone, et plus préférentiellement 10 atomes de carbone.

La quantité de composé B n'est pas critique. D'une manière générale, la concentration molaire du composé B par rapport à celle du composé du titane A est comprise entre 0,2 et 10 % et de préférence entre 1 et 5 %.

Enfin la solution de départ comprend des germes de dioxyde de titane utilisés d'une manière spécifique.

Ainsi, les germes de dioxyde de titane utilisés dans la présente invention doivent présenter tout d'abord une taille inférieure à 8 nm, mesurée par diffraction X. De préférence, on utilise des germes de dioxyde de titane présentant une taille comprise entre 3 et 5 nm.

Ensuite, le rapport pondéral du dioxyde de titane présent dans les germes sur le titane présent dans le milieu d'hydrolyse avant introduction des germes - c'est-à-dire apporté par le composé du titane A - et exprimé en $TiO_2$ est compris entre 0,01 et 3 %. Ce rapport peut être préférentiellement compris entre 0,05 et 1,5 %. La réunion de ces deux conditions sur les germes (taille et rapport pondéral) associée au procédé tel que décrit précédemment permet de contrôler précisément la taille finale des particules de dioxyde de titane en associant à un taux de germes une taille de particule. On peut ainsi obtenir des particules dont la taille varie entre 5 et 100 nm.

On utilise des germes de dioxyde de titane sous forme anatase de manière à induire la précipitation du dioxyde de titane sous forme anatase. Généralement, du fait de leur petite taille, ces germes se présentent plutôt sous la forme d'anatase mal cristallisé. Les germes se présentent habituellement sous la forme d'une suspension aqueuse constituée de dioxyde de titane. Ils peuvent être généralement obtenus de manière connue par un procédé de neutralisation d'un sel de titane par une base.

L'étape suivante consiste à réaliser l'hydrolyse de cette solution de départ par tout moyen connu de l'homme du métier et en général par chauffage. Dans ce dernier cas, l'hydrolyse peut de préférence être effectuée à une température supérieure ou égale à 70°C. On peut aussi travailler dans un premier temps à une température inférieure à la température d'ébullition du milieu puis maintenir le milieu d'hydrolyse en palier à la température d'ébullition.

Une fois l'hydrolyse réalisée, les particules de dioxyde de titane obtenues sont récupérées par séparation du solide précipité des eaux mères avant d'être redispersées dans un milieu liquide aqueux de manière à obtenir une dispersion de dioxyde de titane. Ce milieu liquide peut être acide ou basique. Il s'agit de préférence d'une solution acide,

par exemple d'une solution aqueuse d'acide nitrique ou chlorhydrique.

Pour obtenir ensuite une dispersion organique de ces particules de dioxyde de titane, tout procédé connu permettant de réaliser la mise en suspension de particules de dioxyde de titane dans une phase organique à partir d'une dispersion aqueuse de dioxyde de titane peut être utilisé.

La dispersion peut ainsi être obtenue par mise en contact d'une dispersion aqueuse de particules de dioxyde de titane avec le solvant organique désiré puis chauffage de manière à éliminer l'eau par distillation. Un tel procédé ne peut être mis en oeuvre que dans le cas où le solvant organique choisi présente une température d'ébullition supérieure à celle de l'eau et est soluble dans l'eau. C'est le cas par exemple de l'éthylène glycol.

La dispersion peut également être obtenue par greffage d'une chaîne hydrophobe à la surface de particules de dioxyde de titane en suspension dans l'eau puis mélange avec un solvant organique non miscible à l'eau de manière à faire migrer les particules de dioxyde de titane dans la phase organique.

Il a été observé que les particules de dioxyde de titane issus d'un procédé de préparation dit en solution ou par voie humide, et notamment issues du procédé décrit ci-dessus avec hydrolyse à température d'environ 100 °C, présentent, de par leur porosité, un indice de réfraction plus faible que les particules de dioxyde de titane issus d'autres procédés. Comme indiqué précédemment, cette propriété présente un grand intérêt lorsque ces particules sont utilisées pour préparer un revêtement sur un substrat, tout particulièrement un substrat à base verrière, car le revêtement obtenu présente également un faible indice de réfraction comme indiqué plus haut.

De manière avantageuse, la phase liquide de la dispersion selon l'invention comprend au moins un composé organométallique à base d'un métal M choisi parmi le titane, le silicium, l'étain, le zirconium ou l'aluminium. Les composés préférés correspondent aux composés organométalliques précédemment décrits.

Le composé organométallique est ajouté généralement par mélange d'une solution du composé organométallique et d'une dispersion en phase organique des particules de dioxyde de titane. On peut, selon la nature du composé organométallique utilisé, ajouter également lors de ce mélange des additifs tels que des co-solvants, des tensio-actifs ou de agents de stabilisation. Le mélange peut également être amélioré par agitation de la dispersion par des ultra-sons.

La solution de composé organométallique ajoutée aux dispersions organiques à base de particules de dioxyde de titane est en général une solution en phase organique, ladite phase organique pouvant être choisie parmi : l'éthanol, l'isopropanol, l'acétate d'éthyle, ...

Il est possible également d'ajouter les composés organométalliques aux dispersions de dioxyde de titane sous forme pure.

Ces composés organométalliques peuvent être avantageusement stabilisés par des produits tels que la diéthanolamine (DEA), les dérivés de l'acétylacétone tels que l'éthylacétoacétate, les glycols, ...

La dispersion comprend en général 5 à 90 % en poids de composés organométalliques exprimés en oxydes métalliques ($MO_x$) par rapport au poids de $TiO_2$ apporté par les particules et de composés organométalliques exprimés en oxydes métalliques ($MO_x$), de préférence 15 à 80 %, voire de 20 à 75 %.

Comme indiqué plus haut, afin d'exacerber l'effet photocatalytique du revêtement à base de dioxyde de titane, il est possible d'ajouter au dioxyde de titane, comme indiqué précédemment, des catalyseurs, des additifs permettant d'absorber mieux les U.V., ou de décaler la bande d'absorption vers le visible, ou encore des métaux permettant de doper le dioxyde de titane afin entre autre d'augmenter le nombre de porteurs électroniques.

Selon une première variante, au moins une partie des particules de dioxyde de titane des dispersions comprennent dans leur réseau cristallin des ions métalliques choisis parmi le fer, le cuivre, le ruthénium, le molybdène, le bismuth, le tantale, le niobium, le cobalt, le nickel, le vanadium. Le rapport de la masse de ces ions métalliques par rapport à la masse de dioxyde de titane peut être compris entre 0,01 et 10 %. Ces dispersions peuvent être obtenues par introduction de sels des ions métalliques lors de la préparation des particules de dioxyde de titane. Ainsi, si les particules de dioxyde de titane sont obtenues par thermohydrolyse d'un composé du titane comme il l'est décrit dans la demande EP-A-0 335 773, il est possible d'ajouter dans le milieu de thermohydrolyse les ions métalliques de manière à introduire les ions dans le réseau cristallin du dioxyde de titane.

Selon une deuxième variante, au moins une partie des particules de dioxyde de titane des dispersions sont recouvertes au moins en partie d'une couche de sels ou d'oxydes métalliques, le métal étant choisi parmi le fer, le cuivre, le ruthénium, le cérium, le molybdène, le bismuth, le tantale, le niobium, le cobalt, le nickel, le vanadium, le tungstène, l'étain, le zirconium, le cadmium, le zinc. Le rapport de la masse de ces métaux par rapport à la masse de dioxyde de titane peut être compris entre 0,01 et 20 %. Ces dispersion peuvent être obtenues par précipitation de sels métalliques sur les particules de dioxyde de titane avant mise en milieu organique. Ainsi, lorsque les particules de dioxyde de titane sont encore en milieu aqueux à la suite d'un procédé de préparation par voie humide, on introduit dans la phase aqueuse des sels métalliques et on les fait précipiter de manière à recouvrir au moins en partie les particules de dioxyde de titane.

Selon une troisième variante, au moins une partie des particules de dioxyde de titane des dispersions sont recouvertes au moins en partie d'une couche de métal choisi parmi le platine, l'argent ou le rhodium. Le rapport de la masse de ces métaux par rapport à la masse de dioxyde de titane peut être compris entre 0,01 et 5 %. Ces dispersions peuvent être obtenues par réduction de sels métalliques sur les particules de dioxyde de titane avant mise en milieu

organique. Par exemple, lorsque les particules de dioxyde de titane sont encore en milieu aqueux à la suite d'un procédé de préparation par voie humide, on introduit dans la phase aqueuse des sels métalliques et on les réduit de manière à recouvrir au moins en partie les particules de dioxyde de titane.

Selon une quatrième variante, les dispersions comprennent, en plus des particules de dioxyde de titane, des additifs sous forme de particules à base de composés métalliques choisis parmi le cérium, cadmium, l'étain, le tungstène, le zinc ou le zirconium. Ces particules sont de taille colloïdale, en général comprise entre 5 et 100 nm. Leur taux dans la dispersion peut être compris entre 0,1 et 20 % en poids. Comme indiqué précédemment, les composés métalliques peuvent être des oxydes ou des sulfures métalliques, tels que $CeO_2$, $SnO_2$, $WO_3$, ZnO, $ZrO_2$ ou $CdSe_xS_y$ avec x et y compris entre 0 et 1, et x + y = 1. Ces dernières particules peuvent être introduites dans les dispersions par simple mélange avec une dispersion aqueuse de particules de dioxyde de titane issue d'une voie humide puis transfert de toutes les particules de la phase aqueuse en phase organique.

Les dispersions selon l'invention peuvent présenter les caractéristiques des quatre variantes séparément ou simultanément.

Enfin, l'invention concerne l'utilisation d'une dispersion organique telle que décrite ci-dessus dans un procédé de préparation du substrat selon l'invention.

D'autres détails et caractéristiques avantageuses de l'invention ressortent de la description ci-après d'exemples de réalisation non limitatifs.

Comme représenté de manière extrêmement schématique en figure 1, tous les exemples suivants concernent le dépôt d'un revêtement (3) dit "anti-salissures" essentiellement à base de dioxyde de titane sur un substrat (1).

## EXEMPLES

### Exemple 1 : préparation d'une dispersion organique de particules de dioxyde de titane

On prépare une dispersion aqueuse de particules de dioxyde de titane selon l'enseignement de la demande de brevet EP-A-0 335 773, en présence de germes.

#### Hydrolyse

On ajoute successivement à 394,7 g d'une solution d'oxychlorure de titane à 1,9 mol/kg :

- 42,02 g d'acide chlorhydrique à 36 %,
- 4,73 g d'acide citrique,
- 547,1 g d'eau épurée,
- 11,36 g (0,2 % en poids par rapport au $TiO_2$) de germes d'anatase présentant une taille comprise entre 5 et 6 nm.

Le mélange est porté à ébullition et y est maintenu pendant 3 h.

#### Récupération des particules et remise en dispersion

La solution est ensuite filtrée et les particules obtenues sont lavées à l'eau jusqu'à élimination complète des chlorures. Elles sont ensuite redispersées à pH 1,5 (contrôlé par l'ajout de $HNO_3$) avec un extrait sec est de 20 % en poids.

On obtient une dispersion aqueuse comprenant des particules de diamètre 45 nm mesuré par MET. L'analyse par diffraction X indique que les particules sont à base de dioxyde de titane uniquement sous forme anatase à 80 % en poids. Les particules obtenues sont poreuses.

#### Mise en dipersion en milieu organique

On mélange 100 parties en masse de cette dispersion à 100 parties d'éthylène glycol. Le mélange est ensuite chauffé à 80°C de manière à éliminer l'eau par distillation ménagée sous pression réduite (100 mbar), puis à 120 °C pour éliminer l'eau liée.

On obtient une dispersion de particules de dioxyde de titane dans l'éthylène glycol. L'extrait sec est de 20 % en poids. La taille des particules mesurée dans l'éthylène glycol par MET est de 45 nm. La teneur en eau résiduelle est de 0,7 % en poids par rapport au dioxyde de titane.

### Exemple 2 : préparation d'une dispersion organique de particules de dioxyde de titane dopé niobium

On répète l'exemple 1 si ce n'est qu'on ajoute $NbCl_5$ dans le milieu d'hydrolyse dans une quantité telle que le

rapport molaire Nb/$TiO_2$ est de 0,1 %.

**Exemples 3 à 7 : dépôt des dispersions des exemples 1 et 2 par pyrolyse**

Le substrat (1) est en verre clair silico-sodo-calcique de 6 mm d'épaisseur et mesure 50 cm de long et de large.
Entre le revêtement (3) et le substrat (1), se trouve une couche mince optionnelle (2).
Les exemples 3 à 7 suivants concernent un revêtement (3) déposé par une technique de pyrolyse en phase liquide. On peut procéder en continu, en utilisant une buse de distribution adaptée disposée transversalement et au-dessus du ruban de verre float, au sortir de l'enceinte du bain float proprement dit. Ici, on a procédé de façon discontinue : le substrat (1), déjà découpé aux dimensions indiquées, est d'abord chauffé dans un four à une température de 400 à 650 °C, avant de défiler à une vitesse constante devant une buse mobile projetant une solution appropriée.

**- Exemple 3**

Dans cet exemple, il n'y a pas de couche optionnelle (2). Le revêtement (3) est déposé à l'aide d'une dispersion organique A comprenant :

- une formulation comprenant deux composés organométalliques de titane et deux solvants selon les proportions suivantes :

  . 20 % en poids de di-iso-propoxy di-acétylacétonate de titane,
  . 20 % en poids de tétraoctylène glycolate de titane,
  . 40 % en poids d'acétate d'éthyle,
  . 20 % en poids d'isopropanol,

- la dispersion organique de particules de dioxyde de titane selon l'exemple 1 diluée et présentant les caractéristiques suivantes:

  . teneur massique en particules : 10 %,
  . particules de taille : 45 nm, mesurée au MET,
  . taille des cristallites : 5 nm,
  . phase cristalline : anatase supérieur à 80 %
  . phase liquide : éthylène glycol.

La formulation et la dispersion organique sont en proportions relatives telles que la teneur en particules de dioxyde de titane dans la dispersion A est ajustée de façon à obtenir une teneur de 25 % en poids de dioxyde de titane provenant des particules dans le revêtement une fois déposé (masse de $TiO_2$ issu des particules / masse totale des oxydes dans le revêtement en supposant que la décomposition des composés organométalliques de la dispersion A en oxydes est totale).
Dès que le substrat (1) a atteint la température voulue dans le four, soit environ 500 °C, celui-ci défile devant la buse projetant à température ambiante le mélange indiqué à l'aide d'air comprimé.
On obtient alors une couche de dioxyde de titane d'environ 90 nm d'épaisseur, cette dernière étant contrôlée par la vitesse de défilement du substrat (1) devant la buse et/ou la température dudit substrat. La couche est partiellement cristallisée sous forme anatase.
Ce revêtement contient à la fois du dioxyde de titane provenant de la décomposition des organométalliques et des particules de dioxyde de titane de la dispersion, le premier jouant, en quelque sorte, le rôle de liant minéral par rapport au second. La couche présente une tenue mécanique excellente.
L'indice de réfraction est de 2,3.

**- Exemple 4**

L'exemple 3 est renouvelé, si ce n'est que le substrat (1) comporte une couche mince (2) en oxyde d'étain dopé fluor $SnO_2$:F en vue de constituer une couche statique et/ou bas-émissive et/ou atténuant la couleur notamment en réflexion.
Cette couche est obtenue par pyrolyse de poudre à partir de difluorure de dibutylétain DBTF. On peut aussi l'obtenir de manière connue par pyrolyse en phase liquide ou vapeur, comme cela est par exemple décrit dans la demande de brevet EP-A-0 648 196. En phase vapeur, on peut notamment utiliser un mélange de monobutyl trichlorure d'étain et d'un précurseur fluoré associé éventuellement à un oxydant "doux" du type $H_2O$.

Cette couche mince présente une épaisseur de 73 nm, un indice de 1,9 et une résistance carrée de 50 ohms/carré.

Ce substrat, traité de la même manière que dans l'exemple 3 et monté en double-vitrage de façon à ce que le revêtement (3) soit en face 1 (avec un autre substrat non revêtu mais de même nature et dimensions que le substrat (1)) par l'intermédiaire d'une lame d'air de 12 mm, présente une valeur de pureté de couleur en réflexion (dans les dorés) de 3,6 %, et de 1,1 % en transmission.

Le substrat de l'exemple 3, monté de la même manière, présente une valeur de pureté de couleur en réflexion (dans les dorés) de 26 %, et de 6,8 % en transmission.

La sous-couche en $SnO_2$:F a une influence favorable sur la colorimétrie du substrat, en rendant nettement plus "neutre" sa coloration, aussi bien en transmission qu'en réflexion, coloration provoquée par la présence du revêtement (3) de dioxyde de titane, présentant un indice de réfraction relativement élevé. En outre, cette sous-couche diminue la diffusion des alcalins dans la couche photocatalytique de $TiO_2$. L'activité photocatalytique est donc améliorée. Malgré la présence d'une quantité élevée de particules dans le revêtement, le flou est nettement inférieur à 1 %. On définit le flou par le raport de la transmission lumineuse diffractée sur la transmission lumineuse totale du substrat à 560 nm.

**- Exemple 5**

L'exemple 3 est renouvelé, si ce n'est que le substrat (1) comporte une couche mince (2) à base d'oxycarbure de silicium en vue de constituer une barrière à la diffusion des alcalins et/ou une couche atténuant la réflexion lumineuse.

Cette couche est obtenu par CVD à partir d'un mélange de $SiH_4$ et d'éthylène en dilution dans de l'azote, comme décrit dans la demande de brevet EP-A-0 518 755. Cette couche est particulièrement efficace pour éviter la tendance à la diffusion d'alcalins ($Na^+$, $K^+$) et d'alcalino-terreux ($Ca^{2+}$) provenant du substrat (1) vers le revêtement (3).

Cette couche mince présente une épaisseur de 50 nm, un indice de 1,75.

Ayant, comme $SnO_2$:F, un indice de réfraction intermédiaire entre celui du substrat de base (1) (1,52) et du revêtement (3) (2,3), elle permet également d'atténuer l'intensité de la coloration du substrat aussi bien en transmission qu'en réflexion, et de diminuer globalement la valeur de la réflexion lumineuse $R_L$ dudit substrat.

De plus, la sous-couche à base d'oxycarbure de silicium constitue une barrière efficace à la diffusion des alcalins, et donc l'activité photocatalytique du revêtement est nettement améliorée.

**- Exemple 6**

L'exemple 3 est renouvelé, si ce n'est que le revêtement (3) est déposé à l'aide d'une dispersion B comprenant :

- une formulation à base de tétraéthoxyde de silicium $Si(OEt)_4$ dilué dans l'éthanol à raison 0,1 mole par litre d'éthanol,
- la dispersion organique de particules de dioxyde de titane de l'exemple 1.

La formulation et la dispersion organique sont en proportions relatives telles que la teneur en particules de dioxyde de titane dans la dispersion B est ajustée de façon à obtenir une teneur de 80 % en poids de dioxyde de titane dans le revêtement une fois déposé (masse de $TiO_2$ provenant des particules / masse de $TiO_2$ des particules + masse du $SiO_2$ obtenu par décomposition de $Si(OEt)_4$ en supposant que la décomposition est totale).

Dès que le substrat (1) a atteint la température voulue dans le four, soit environ 200 °C, celui-ci défile devant la buse laquelle projette à température ambiante la dispersion B à l'aide d'air comprimé.

On obtient alors une couche mixte de particules de $TiO_2$ venant de la dispersion, liées entre elles et au substrat par le $SiO_2$ provenant de la décomposition de l'organométallique. Le revêtement a une épaisseur d'environ 50 nm, il est cristallisé à 65 % sous forme anatase.

La couche présente une activité photocatalytique élevée grâce à la surface spécifique élevée développée par les particules de $TiO_2$(> 250 $m^2$/g). De plus, le liant $SiO_2$ joue le rôle d'une barrière aux alcalins particulièrement efficace à l'interface substrat / particule.

Enfin, l'indice de réfraction est nettement inférieur à une couche de $TiO_2$ massif, grâce à la présence de $SiO_2$ et à sa porosité élevée. Cet indice est inférieur à 1,6. La valeur de la réflexion lumineuse $R_L$ du substrat est donc diminuée.

**- Exemple 7**

L'exemple 6 est renouvelé, si ce n'est que la dispersion B contient des particules de dioxyde de titane dopé au niobium à 0,1 % selon l'exemple 2.

La couche présente une activité photocatalytique encore plus élevée.

**Exemple 8 : dépôt de la dispersion de l'exemple 1 par dip-coating**

Cet exemple utilise la technique dite sol-gel utilisant un mode de dépôt par "trempé" ou "dip-coating" dont le principe ressort de la figure 2 : il s'agit d'immerger le substrat (1) dans la solution liquide (4) contenant la dispersion, puis d'en extraire le substrat (1) à vitesse contrôlée à l'aide d'un moyen moteur (5), le choix de la vitesse d'extraction permettant d'ajuster l'épaisseur de la dispersion restant à la surface des deux faces du substrat et, de fait, l'épaisseur des revêtements déposés, après traitement thermique de ce dernier pour à la fois évaporer le solvant et décomposer les précurseurs des oxydes métalliques.
Le revêtement (3) est déposé à l'aide d'une dispersion A ou B, telle que définie dans les exemples 3, 6 ou 7. On utilise également une dispersion organique C comprenant :

- une formulation à base de tétrabutoxyde de titane $Ti(O\text{-}Bu)_4$ stabilisé avec de la di-éthanol amine DEA dans une proportion molaire 1:1, et dilué dans l'éthanol à raison de 0,2 mole de tétrabutoxyde par litre d'éthanol,
- une dispersion de particules de dioxyde de titane selon l'exemple 1 présentant les caractéristiques suivantes :

  . teneur massique en particules : 10 %,
  . particules de taille 45 nm, mesurée au MET,
  . taille des cristallites : 5 nm,
  . phase cristalline : anatase supérieure à 80 %,
  . phase liquide : éthylène glycol.

La formulation et la dispersion organique sont en proportions relatives telles que la teneur en particules de dioxyde de titane dans la dispersion C est ajustée de façon à obtenir une teneur de 80 % en poids de dioxyde de titane provenant des particules dans le revêtement une fois déposé (masse de $TiO_2$ issu des particules / masse totale des oxydes dans le revêtement en supposant que la décomposition des composés organométalliques de la dispersion C en oxydes est totale).
Après trempé des substrats (1) comportant des couches minces (2) à base d'oxycarbure de silicium dans les dispersions A, B ou C, les substrats (1) sont chauffés 3 heures à 550 °C avec une montée en température progressive.
On obtient, dans les trois cas, sur chacune des faces un revêtement (3) en dioxyde de titane bien cristallisé sous forme anatase. Les taux de cristallisation anatase sont comparables aux exemples utilisatn une technqiue de dépôt par pyrolyse, mais la taille des cristallites est supérieure grâce au traitement thermique prolongé. Il en résulte une meilleure activité photocatalytique.
Le revêtement a un indice de réfraction d'au plus 1,8.

**Exemple 9 : dépôt de la dispersion de l'exemple 1 par "cell-coating"**

Cet exemple utilise la technique appelée "cell-coating" dont le principe ressort de la figure 3 : il s'agit de former une cavité étroite délimitée par deux faces sensiblement parallèles (6), (7) et deux joints (8), (9), au moins une de ces faces (6), (7) étant constituée par la face du substrat (1) à traiter. Puis, on remplit la cavité de la dispersion (4) de manière contrôlée, de manière à former un ménisque de mouillage à l'aide d'une pompe (10) péristaltique par exemple, en laissant un film de la dispersion (4) sur la face du substrat (1 ) au fur et à mesure du retrait de la solution.
La cavité est ensuite maintenue au moins le temps nécessaire à un séchage. Le durcissement du film sur le substrat est assuré par traitement thermique comme dans les exemples précédents.
Le revêtement (3) est déposé à l'aide de solutions A, B ou C décrites dans les exemples 3, 6 et 8.
Après trempé du substrat (1) comportant des couches minces (2) à base d'oxycarbure de silicium dans les dispersions A, B ou C, les mêmes traitements thermiques que dans l'exemple 8 sont opérés.
On obtient, dans les trois cas, un revêtement (3) comparable aux revêtements de l'exemple 8, mais ici une seule face de chaque substrat est traitée.

**Exemple 10 : contrôle des propriétés des substrats obtenus**

Test 1 de mouillage :

Il consiste à déposer sur le substrat à évaluer une couche d'un organosilane et à l'irradier par des U.V.A. de manière à la dégrader par photocatalyse. L'organosilane modifiant les propriétés de mouillage, les mesures d'angle de contact à l'eau du substrat au cours de l'irradiation indiquent l'état de dégradation de la couche greffée. La vitesse de disparition de cette couche est reliée à l'activité photocatalytique du substrat.
L'organosilane greffé est un trichlorosilane : l'octadécyltrichlorosilane (OTS). Le greffage est réalisé par trempé.

L'appareil de test est constitué d'un carrousel tournant autour de 1 à 6 lampes U.V.A. basse pression. Les éprouvettes à évaluer sont placées dans le carrousel, la face à évaluer du côté du rayonnement U.V.A. Selon leur position et le nombre de lampes allumées, chaque éprouvette reçoit une irradiation U.V.A. variant de 0,5 $W/m^2$ à 50 $W/m^2$.
Le temps entre chaque mesure de l'angle de contact varie entre 20 min et 3 h, selon l'activité photocatalytique de l'éprouvette considérée. Les mesures sont effectuées à l'aide d'un goniomètre.
Avant irradiation, les verres présentent un angle d'environ 100 °. On considère que la couche est détruite après irradiation lorsque l'angle est inférieur à 20 °.
Chaque éprouvette testée est caractérisée par la vitesse moyenne de disparition de la couche, donnée en nanomètre par heure, i.e. l'épaisseur de la couche d'organosilane déposée, divisée par la durée irradiation permettant d'atteindre un palier final inférieur à 20 ° (temps de disparition de la couche d'organosilane).

Test 2 de l'isobutane

Il consiste à contrôler la dégradation du gaz isobutane mis au contact d'un verre traité selon l'invention.
On introduit dans un réacteur le verre à tester et une quantité d'isobutane égale à 20 % du volume total du réacteur.
L'appareil de test est constitué d'un carrousel tournant autour de 1 à 6 lampes U.V.A. basse pression présentant un maximum d'émission entre 300 et 400 nm. Les réacteurs contenant les verres à évaluer sont placés dans le carrousel, la face du verre à évaluer du côté du rayonnement U.V.A. Selon leur position et le nombre de lampes allumées, chaque verre reçoit une irradiation U.V.A. allant jusqu'à 30 $W/m^2$.
L'irradiation dure 8 à 22 h.
On dose ensuite à l'aide d'un chromatographe en phase gazeuse l'avancement de la photodécomposition de l'isobutane par suivi de la quantité d'$O_2$. On traduit cet avancement à l'aide la constante de vitesse de disparition de l'$O_2$ en mole/h/$cm^2$.

Test 3 de l'acide palmitique

Il consiste à déposer sur le substrat à évaluer une couche d'acide palmitique et à l'irradier par des U.V.A. de manière à la dégrader par photocatalyse.
On pulvérise sur les verres à tester une solution chloroformique d'acide palmitique à 8 g/l. La quantité d'acide palmitique déposée par 30 $cm^2$ de verre est de 1,5 mg. Puis, les verres sont introduits dans un réacteur étanche entourés de six lampes UV présentant un maximum d'émission entre 300 et 400 nm. Les verres à tester aunsi irradiés reçoivent une puissance de 10 $W/m^2$. L'irradiation dure au maximum 40 h.
Les verres sont ensuite retirés du réacteur. Pour doser l'acide palmitique restant sur les verres, ces derniers sont lavés avec une solution d'acide chloroformique ; la solution obtenue est alors dosée par chromatographie en phase liquide afin de doser l'acide palmitique restant.
On donne ainsi le temps pour la dégradation totale de 1,5 mg d'acide palmitique exprimé en minute.
La dégradation de l'acide palmitique peut également être observée visuellement par la diminution du flou du verre induit par la couche d'acide palmitique.

Test 4 de l'anti-buée:

Il consiste à observer les conséquences de la photocatalyse et de la structure du revêtement (taux de groupes hydroxyl, porosité, rugosité) sur le mouillage. Si la surface est photoréactive, les micropollutions carbonées qui se déposent sur le revêtement sont détruites en permanence, et la surface est hydrophile donc anti-buée. On peut aussi faire une évaluation quantitative en réchauffant brusquement le substrat revêtu initialement entreposé au froid ou simplement en soufflant sur le substrat, en regardant s'il apparaît de la buée et dans l'affirmative, à quel moment, puis en mesurant le temps nécessaire à la disparition de ladite buée.

Test 5 des angles de contact :

Il s'agit d'évaluer l'hydrophilie et l'oléophilie à la surface du revêtement (3), en comparaison de celles de la surface d'un verre nu, par la mesure d'angles de contact d'une goutte d'eau et d'une goutte de DOP (dioctylphtalate) à leurs surfaces. La mesure est réalisée après avoir laissé les substrats une semaine à l'atmosphère ambiante sous éclairage naturel, dans le noir puis les avoir soumis 20 min à un rayonnement UVA.

Résultats des tests photocatalytiques :

| Substrat | | Test de mouillage à 1,8 $W/m^2$ UVA (en nm/h) | Test isobutane 30 $W/m^2$ UVA (en mole $O_2/h/cm^2$) | Test acide palmitique 10 $W/m^2$ UVA (en min) |
|---|---|---|---|---|
| Exemple 3 | | 0,1 | $10^{-8}$ | > 1000 |
| Exemple 4 | | 0,3 | $2.10^{-8}$ | > 1000 |
| Exemple 5 | | 3 | $10^{-7}$ | 800 |
| Exemple 6 | | 4 | $10^{-7}$ | 730 |
| Exemple 7 | | 6 | $10^{-7}$ | 620 |
| Exemples 8 et 9 | dispersion A | 5 | $10^{-7}$ | 660 |
| | dispersion B | 10 | $2.10^{-7}$ | 390 |
| | dispersion C | 20 | $5.10^{-7}$ | 250 |

Résultats test 4 : pour tous les substrats des exemples 3 à 9, il n'apparaît aucune buée.

Résultats test 5 : pour tous les substrats des exemples 3 à 9, l'angle de contact à l'eau et au DOP est inférieur à 5 ° après 20 min d'exposition aux UVA.

## Revendications

1. Substrat (1) à base verrière muni sur au moins une partie d'une de ses faces d'un revêtement (3) à propriété photocatalytique, à base de dioxyde de titane au moins partiellement cristallisé et incorporé audit revêtement en partie sous forme de particules majoritairement cristallisées sous forme anatase, lesdites particules étant incorporées dans le revêtement (3) à l'aide d'un liant minéral, sous forme d'un oxyde ou d'un mélange d'oxydes, amorphe ou partiellement cristallisé, l'épaisseur du revêtement (3) étant comprise entre 5 nm et 1 micron.

2. Substrat (1) selon la revendication 1, **caractérisé en ce que** la taille de particules est comprise entre 5 et 80 nm.

3. Substrat (1) selon la revendication 2, **caractérisé en ce que** le revêtement (3) présente un indice de réfraction compris entre 1,40 et 2,35, de préférence compris entre 1,6 et 2,3.

4. Substrat (1) selon l'une quelconque des revendications précédentes, **caractérisé en ce que** le ou les oxyde(s) du liant minéral sont choisis parmi l'oxyde de silicium, l'oxyde de titane, l'oxyde d'étain, l'oxyde de zirconium et l'oxyde d'aluminium.

5. Substrat (1) selon l'une quelconque des revendications précédentes, **caractérisé en ce qu'**au moins une partie des particules de dioxyde de titane comprennent dans leur réseau cristallin par des ions métalliques choisis parmi le fer, le cuivre, le ruthénium, le cérium, le molybdène, le bismuth, le tantale, le niobium, le cobalt, le nickel, le vanadium.

6. Substrat (1) selon l'une quelconque des revendications précédentes, **caractérisé en ce qu'**au moins une partie des particules de dioxyde de titane sont recouvertes au moins en partie d'une couche d'oxydes ou de sels métalliques, le métal étant choisi parmi le fer, le cuivre, le ruthénium, le cérium, le molybdène, le bismuth, le tantale, le niobium, le cobalt, le nickel, le vanadium, le tungstène, l'étain, le zirconium, le cadmium, le zinc.

7. Substrat (1) selon l'une quelconque des revendications précédentes, **caractérisé en ce qu'**au moins une partie des particules de dioxyde de titane sont recouvertes au moins en partie d'une couche de métal choisi parmi le platine, l'argent ou le rhodium.

8. Substrat (1) selon l'une quelconque des revendications précédentes, **caractérisé en ce que** le revêtement (3) comprend des particules additives à base de cadmium, étain, tungstène, zinc, cérium ou zirconium.

**9.** Substrat (1) selon l'une quelconque des revendications précédentes, **caractérisé en ce que** l'épaisseur du revêtement (3) est comprise entre 5 nm et 100 nm.

**10.** Substrat (1) selon l'une des revendications précédentes, **caractérisé en ce qu'**est disposé sous le revêtement (3) à base de dioxyde de titane au moins une couche mince (2) à fonction antistatique, thermique, optique, ou faisant barrière à la migration des alcalins provenant du substrat.

**11.** Substrat (1) selon la revendication précédente, **caractérisé en ce que** la couche mince (2) à fonction anti-statique, éventuellement à polarisation contrôlée, et/ou thermique, et/ou optique est à base de matériau conducteur du type métal ou du type oxyde métallique dopé tel que l'oxyde d'indium dopé à l'étain ITO, l'oxyde d'étain dopé avec un halogène de type fluor $SnO_2$:F, ou de l'oxyde de zinc dopé à l'indium ZnO:In, au fluor ZnO:F, à l'aluminium ZnO:Al ou à l'étain ZnO:Sn.

**12.** Substrat (1) selon la revendication 10, **caractérisé en ce que** la couche mince (2) à fonction optique est à base d'un oxyde ou d'un mélange d'oxydes dont l'indice de réfraction est intermédiaire entre celui du revêtement (3) et celui du substrat (1), notamment choisi(s) parmi les oxydes suivants : $Al_2O_3$, $SnO_2$, $In_2O_3$, oxycarbure ou oxynitrure de silicium.

**13.** Substrat (1) selon la revendication 10, **caractérisé en ce que** la couche mince (2) à fonction de barrière aux alcalins est à base d'oxyde, de nitrure, d'oxynitrure ou d'oxycarbure de silicium, d'oxyde d'aluminium contenant du fluor $Al_2O_3$:F, ou de nitrure d'aluminium.

**14.** Substrat (1) selon la revendication 10, **caractérisé en ce que** le revêtement (3) constitue la dernière couche d'un empilement de couches anti-reflets.

**15.** Vitrage monolithique, multiple du type double-vitrage ou feuilleté, incorporant le substrat (1) selon l'une quelconque des revendications précédentes.

**16.** Utilisation du substrat (1) selon l'une quelconque des revendications 1 à 14 pour la fabrication des vitrages "auto-nettoyants", anti-buée et/ou anti-salissures, notamment les vitrages pour le bâtiment du type double vitrage, des vitrages pour véhicules du type pare-brise, lunette arrière ou latéraux d'automobiles, trains, avions, ou vitrages utilitaires comme des verres d'aquarium, de vitrine, de serres, d'ameublement d'intérieur, de mobilier urbain, ou des miroirs, écrans de télévision, vitrages à absorption variable commandée électriquement.

**17.** Procédé d'obtention du substrat (1) selon l'une quelconque des revendications 1 à 14, **caractérisé en ce qu'**on dépose le revêtement (3), par pyrolyse en phase liquide, à partir d'une dispersion comprenant au moins un composé organométallique et des particules de dioxyde de titane, lesdites particules présentant les caractéristiques des particules incorporées au revêtement (3) final.

**18.** Procédé d'obtention du substrat (1) selon l'une quelconque des revendications 1 à 14, **caractérisé en ce qu'**on dépose le revêtement (3), par une technique de sol-gel, avec un mode de dépôt du type trempé, "cell-coating", enduction laminaire ou "spray-coating", à partir d'une dispersion comprenant au moins un composé organométallique et des particules de dioxyde de titane, lesdites particules présentant les caractéristiques des particules incorporées au revêtement (3) final.

**19.** Procédé selon la revendication 17 ou 18, **caractérisé en ce qu'**on utilise une dispersion telle que le rapport de la masse des composés organométalliques exprimés en oxydes métalliques ($MO_x$) par rapport au poids de $TiO_2$ apporté par les particules et des composés organométalliques exprimés en oxydes métalliques ($MO_x$) est compris entre 5 et 80 %.

**20.** Procédé selon l'une des revendications 17 à 19, **caractérisé en ce que** les composés organométalliques sont à base de titane ou de silicium.

**21.** Procédé selon l'une des revendications 17 à 20, **caractérisé en ce qu'**on dépose le revêtement (3) en au moins deux étapes successives.

**22.** Procédé selon l'une des revendications 17 à 21, **caractérisé en ce qu'**on fait subir au revêtement (3), après dépôt, au moins un traitement thermique du type recuit.

**23.** Dispersion organique, **caractérisée en ce qu'**elle comprend :

- des particules de dioxyde de titane poreuses de taille comprise entre 5 et 80 nm, monodisperses et majoritairement sous forme cristalline anatase,
- au moins un composé organométallique,
- et au moins un solvant organique, de préférence présentant une chaleur latente de vaporisation inférieure à celle de l'eau.

**24.** Dispersion selon la revendication 23, **caractérisée en ce que** le solvant organique est choisi parmi les alcools et en particulier les glycols et les esters tels que l'acétate d'éthyle.

**25.** Dispersion selon la revendication 23 ou 24, **caractérisée en ce que** les particules de dioxyde de titane sont issues d'un procédé de préparation en solution.

**26.** Dispersion selon la revendication 25, **caractérisée en ce que** les particules de dioxyde de titane sont issus du procédé qui consiste à hydrolyser au moins un composé du titane A en présence d'au moins un composé B choisi parmi :

(i) les acides qui présentent :

- soit un groupement carboxyle et au moins deux groupements hydroxyles et/ou amines,
- soit au moins deux groupements carboxyles et au moins un groupement hydroxyle et/ou amine,

(ii) les acides phosphoriques organiques de formules suivantes :

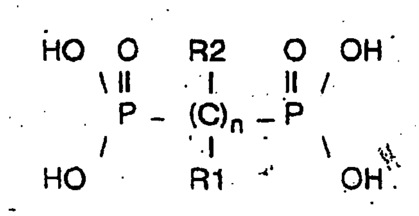

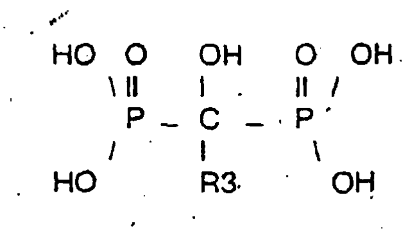

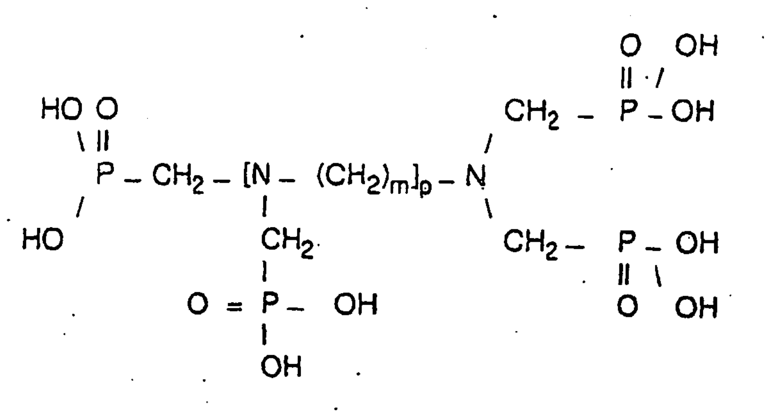

dans lesquelles, n et m sont des nombres entiers compris entre 1 et 6, p est un nombre entier compris entre 0 et 5, R1, R2, R3 identiques ou différents représentant un groupement hydroxyle, amino, aralkyl, aryl, alkyl ou l'hydrogène,
(iii) les composés capables de libérer des ions sulfates en milieu acide,
(iv) les sels des acides décrits ci-dessus,

et en présence de germes de dioxyde de titane anatase présentant une taille d'au plus 5 nm et dans un rapport pondéral exprimé en $TiO_2$ présent dans les germes/titane présent avant introduction des germes dans le milieu d'hydrolyse, exprimé en $TiO_2$ compris entre 0,01 % et 3 %.

**27.** Dispersion selon l'une quelconque des revendications 23 à 26, **caractérisée en ce qu'**elle comprend également au moins un composé organométallique à base d'un métal choisi parmi le titane, le silicium, l'étain, le zirconium ou l'aluminium.

**28.** Dispersion selon la revendication 27, **caractérisée en ce que** le composé organométallique est un composé de formule générale $M(OR)_4$ dans laquelle M représente le métal choisi parmi le titane, le silicium, l'étain, le zirconium ou l'aluminium, et R un radical alkyle, cycloalkyle, aryle, alkylaryle ou arylakyle, alcényle, alcynyle, un radical acétylacétonate ou un de ses dérivés, un radical aminé ou un de ses dérivés, un glycolate.

**29.** Dispersion selon l'une quelconque des revendications 23 à 28, **caractérisée en ce que** la proportion des composés organométalliques est telle que le rapport de la masse de ces composés exprimés en oxydes métalliques ($MO_x$) par rapport au poids de $TiO_2$ apporté par les particules et des composé organométalliques exprimés en oxydes métalliques ($MO_x$) est compris entre 5 et 80 %.

**30.** Dispersion selon l'une quelconque des revendications 23 à 29, **caractérisée en ce qu'**elle comprend des particules additives à base de composés métalliques choisis parmi le cadmium, l'étain, le tungstène, le zinc, le cérium ou le zirconium.

**31.** Dispersion selon l'une quelconque des revendications 23 à 30, **caractérisée en ce qu'**au moins une partie des particules de dioxyde de titane de la dispersion sont dopées dans leur réseau cristallin par des ions métalliques choisis parmi le fer, le cuivre, le ruthénium, le cérium, le molybdène, le bismuth, le tantale, le niobium, le cobalt, le nickel, le vanadium.

**32.** Dispersion selon l'une quelconque des revendications 23 à 31, **caractérisée en ce qu'**au moins une partie des particules de dioxyde de titane de la dispersion sont recouvertes au moins en partie d'une couche d'oxydes ou de sels métalliques, le métal étant choisi parmi le fer, le cuivre, le ruthénium, le cérium, le molybdène, le bismuth, le tantale, le niobium, le cobalt, le nickel, le vanadium, le tungstène, l'étain, le zirconium, le cadmium, le zinc.

**33.** Dispersion selon l'une quelconque des revendications 22 à 32, **caractérisée en ce qu'**au moins une partie des particules de dioxyde de titane de la dispersion sont recouvertes au moins en partie d'un catalyseur, notamment d'une couche de métal choisi parmi le platine, l'argent ou le rhodium.

**34.** Utilisation d'une dispersion selon l'une quelconque des revendications 23 à 33 dans un procédé selon l'une des revendications 17 à 22.

## Claims

**1.** A glass-based substrate (1) with at least one portion of one of its faces being provided with a coating (3) with a photocatalytic property, based on titanium dioxide, which is at least partially crystalline and incorporated into said coating partially in the form of particles, which are mainly crystalline in the anatase form, said particles being incorporated into the coating (3) by means of a mineral binder, in the form of an amorphous or partially crystalline oxide or mixture of oxides, the thickness of the coating (3) being comprised between 5 nm and 1 micron.

**2.** The substrate (1) according to claim 1, **characterized in that** the particle size is comprised between 5 and 80 nm.

**3.** The substrate (1) according to claim 2, **characterized in that** the coating (3) has a refractive index comprised between 1.40 and 2.35, preferably comprised between 1.6 and 2.3.

4. The substrate (1) according to any of the preceding claims, **characterized in that** the oxide(s) of the mineral binder is/are selected from silicon oxide, titanium oxide, tin oxide, zirconium oxide and aluminium oxide.

5. The substrate (1) according to any of the preceding claims, **characterised in that** at least one portion of the titanium dioxide particles comprise in their crystalline lattice, ions of metals selected from iron, copper, ruthenium, cerium, molybdenum, bismuth, tantalum, niobium, cobalt, nickel and vanadium.

6. The substrate (1) according to any of the preceding claims, **characterized in that** at least one portion of the titanium dioxide particles is at least partially covered with a layer of metal oxides or salts, the metal being selected from iron, copper, ruthenium, cerium, molybdenum, bismuth, tantalum, niobium, cobalt, nickel, vanadium, tungsten, tin, zirconium, cadmium and zinc.

7. The substrate (1) according to any of the preceding claims, **characterized in that** at least one portion of the titanium dioxide particles is at least partially covered with a layer of metal selected from platinum, silver; or rhodium.

8. The substrate (1) according to any of the preceding claims, **characterized in that** the coating (3) comprises additive particles based on cadmium, tin, tungsten, zinc, cerium or zirconium,

9. The substrate (1) according to any of the preceding claims, **characterised in that** the thickness of the coating (3) is comprised, between 5 nm and 100 nm.

10. The substrate (1) according to any of the preceding claims, **characterized in that** at least one thin layer (2) with an antistatic, thermal or optical function or acting as a barrier to the migration of alkaline materials from the substrate is disposed under the coating (3) based on titanium dioxide,

11. The substrate (1) according to the preceding claim, **characterized in that** the thin layer (2) with an antistatic function, optionally with controlled polarization and/or a thermal function and/or an optical function, is based on a conductive material of the metal type or of the doped metal oxide type, such as indium oxide doped with tin, ITO, tin oxide doped with a fluorine type halogen, $SnO_2$:F, or zinc oxide doped with indium, ZnO:In, with fluorine 2nO:F, with aluminium ZnC:Al or with tin ZnO:Sn.

12. The substrate (1) recording to claim 10, **characterized in that** the thin layer (2) with an optical function is based on an oxide or a mixture of oxides with a refractive index, which is between, that of the coating (3) and that of the substrate (1), notably selected from the following oxides: $Al_2O_3$, $SnO_2$, $Tn_2O_3$, silicon oxycarbide or oxynitride.

13. The substrate (1) according to claim 10, **characterised in that** the thin layer (2) acting as a barrier to alkaline materials is based on silicon oxide, nitride, oxynitride or oxycarbide, aluminium oxide containing fluorine $Al_2O_3$:F or aluminium nitrids.

14. The substrate (1) according to claim 10, **characterised in that** the coating (3) forms the last layer of a stack of antiglare layers.

15. A monolithic, double glazed multiple or laminated type glazing, the substrate (1) according to any of the preceding claims.

16. The use of the substrate (1) according to any of claims 1 to 14, for the production of self-cleaning, antifogging and/or dirt repellent glazing notably double glazing type glazing for buildings, windscreen, rear window or side window type glazing for automotive vehicle, trains or aeroplanes, or multipurpose glazing such as glazing for aquariums, shop windows, greenhouses, interior furniture, urban furniture or for mirrors, television screens or for glazing with electrically controller variable absorption.

17. A method for obtaining the substrate (1) according to any of claims 1 to 14, **characterized in that** the coating (3) is deposited by liquid phase pyrolysis from a dispersion comprising at least one organometallic compound and titanium dioxide particles, said particles having the characteristics of the particles incorporated into the final coating (3).

18. A method for obtaining the substrate (1) according to any of claims 1 to 14, **characterised in that** the coating (3) is deposited by a sol-gel technique, with a dip coating, cell-coating, roller coating or spray coating deposition mode,

from a dispersion comprising at least one organometallic compound and titanium dioxide particles, said particles having the characteristics of the particles incorporated into the final coating (1).

**19.** The method according to claim 17 or 18, **characterized in that** a dispersion is used such that the ratio of the mass of the organometallic compound expressed as the metal oxides ($MC_x$) with respect to the weight of $TiO_2$ provided by the particles and the organometallic compounds expressed as metal oxides ($MO_x$), is comprised between 5 and 80%.

**20.** The method according to one of claims 17 to 19, **characterized in that** the organometallic compounds are based on titanium or silicon.

**21.** The method according to one of claims 17 to 20, **characterized in that** the coating (3) is deposited in at least two successive steps.

**22.** The method, according to one of claims 17 to 21, **characterized in that** the coating (3) undergoes at least one annealing type heat treatment.

**23.** An organic dispersion, **characterized in that** it comprises

- porous titanium dioxide particles a with a size comprised between 5 and 80 nm, monodispersed and mainly in the anatase crystalline form;
- at least one organometallic compound
- and at least one organic solvent, preferably with a latent heat of vaporization which is less than that of water.

**24.** The dispersion according to claim 23, **characterized in that** the organic solvent is selected from alcohols, and in particular glycols and esters such as ethyl acetate.

**25.** The dispersion according to claim 23 or 24, **characterized in that** the titanium dioxide particles stem from a solution preparation method.

**26.** The dispersion according to claim 25, **characterised in that** the titanium dioxide particles stem from the method, which consists of hydrolyzing at least one titanium compound A in the presence of at least one compound F3 selected from:

(i) acids having:

- either one carboxyl group and at least two hydroxyl and/or amino groups;
- or at least two carboxyl groups and at least one hydroxyl and/or amino group;

(ii) organic phosphoric acids with the following formulae:

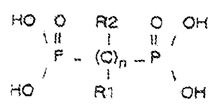

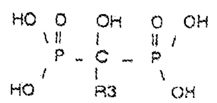

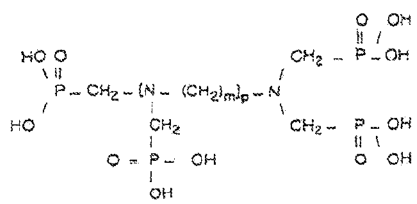

wherein n and m are integers comprised between 1 and 6, p is an integer comprised between 0 and 5, R1, R2 and R3, either identical or different, represent a hydroxyl, amino, aralkyl, aryl or alkyl group, or hydrogen;
(iii) compounds which are capable of releasing sulfate ions in an acid medium;
(iv) salts of the acids defined abode;

and in the presence of seeds of anatase titanium dioxide with a size of at most 5 nm and in a weight ratio expressed as the $TiO_2$ present in the seeds/titanium present before introducing the seeds into the hydrolysis medium, expressed as $TiO_2$ comprised between 0.01% and 3%.

**27.** The dispersion according to any of claims 23 to 26, **characterized in that** it also comprises at least one organometallic compounds based on a metal selected from titanium, silicon, tin, zirconium or aluminium.

**28.** The dispersion according to claim 27, **characterized in that** the organometallic compounds is a compound with general formula $M(OR)_4$ in which M represents the metal selected from titanium, silicon, tin, zirconium or aluminium, and R is an alkyl, cycloalkyl, aryl, alkylaryl or arylalkyl, alkenyl or alkynyl radical, an acetylacetonate radical, or one of its derivatives, or an amino radical or one of its derivatives, or a glycolate.

**29.** The dispersion according to any of claims 23 to 28, **characterized in that** the proportion of the organometallic compounds is such that the ratio of the mass of the organometallic compounds, expressed as the metal oxides ($MO_x$), witch respect to the weight of $TiO_2$ provided by the particles and of the organometallic compounds expressed as metal oxides ($MO_x$) is comprised between 5 and 80%.

**30.** The dispersion according to any of claims 23 to 29, **characterized in that** it comprises additive particles based on compounds of metals selected from cadmium, tin, tungsten, zinc, cerium or zirconium.

**31.** The dispersion according to any of claims 23 to 30, **characterized in that** at least one portion of the titanium dioxide articles of the dispersion are doped in their crystalline lattice with ions of metals selected from iron, copper, ruthenium, cerium, molybdenum, bismuth, tantalum, niobium, cobalt, nickel, vanadium.

**32.** The dispersion according to any of claims 23 to 31, **characterized in that** at least one portion of the titanium dioxide particles of the dispersion are covered at least partially with a layer of metal oxides or salts, the metal being selected from iron, copper, ruthenium, cerium, molybdenum, bismuth, tantalum, niobium, cobalt, nickel, vanadium, tungsten, tin, zirconium, cadmium, zinc.

**33.** The dispersion according to any of claims 23 to 32, **characterized in that** at least one portion of the titanium dioxide particles of the dispersion are covered at least partially with a catalyst, notably a layer of metal selected from platinum, silver, or rhodium.

**34.** The use of a dispersion according to any of claims 23 to 33 in a method according to one of claims 17 to 22.

## Patentansprüche

**1.** Substrat (1) auf Glasbasis, das zumindest auf einem Teil einer seiner Seiten mit einem Überzug (3) mit photokatalytischer Eigenschaft auf Basis von Titandioxid versehen ist, das zumindest teilweise kristallisiert und dem genannten Überzug teilweise in Form von größtenteils anatasförmig kristallisierten Teilchen beigemengt ist, wobei die Teilchen dem Überzug (3) mit Hilfe eines mineralischen Bindemittels in Form eines amorphen oder teilweise kristallisierten Oxids oder Oxidgemischs einverleibt sind, wobei die Dicke des Überzugs (3) zwischen 5 nm und 1 Mikron inklusive ist.

**2.** Substrat (1) nach Anspruch 1, **dadurch gekennzeichnet, dass** die Größe der Teilchen zwischen 5 und 80 nm inklusive ist.

**3.** Substrat (1) nach Anspruch 2, **dadurch gekennzeichnet, dass** der Überzug (3) einen Brechungsindex zwischen 1,40 und 2,35 inklusive, vorzugsweise zwischen 1,6 und 2,3 inklusive, aufweist.

**4.** Substrat (1) nach einem der vorangehenden Ansprüche, **dadurch gekennzeichnet, dass** das oder die Oxide des mineralischen Bindemittels aus dem Siliciumoxid, dem Titanoxid, dem Zinnoxid, dem Zirconiumoxid und dem Aluminiumoxid ausgewählt sind.

5. Substrat (1) nach einem der vorangehenden Ansprüche, **dadurch gekennzeichnet, dass** zumindest ein Teil der Titandioxidteilchen in ihrem Metallgitter Metallionen umfassen, die aus dem Eisen, dem Kupfer, dem Ruthenium, dem Cerium, dem Molybdän, dem Bismut, dem Tantal, dem Niob, dem Kobalt, dem Nickel oder dem Vanadium ausgewählt sind.

6. Substrat (1) nach einem der vorangehenden Ansprüche, **dadurch gekennzeichnet, dass** zumindest ein Teil der Titandioxidteilchen zumindest teilweise mit einer Schicht aus Metallsalzen oder -oxiden überzogen ist, wobei das Metall aus dem Eisen, dem Kupfer, dem Ruthenium, dem Cerium, dem Molybdän, dem Bismut, dem Tantal, dem Niob, dem Kobalt, dem Nickel, dem Vanadium, dem Wolfram, dem Zinn, dem Zirconium, dem Kadmium oder dem Zink ausgewählt ist.

7. Substrat (1) nach einem der vorangehenden Ansprüche, **dadurch gekennzeichnet, dass** zumindest ein Teil der Titandioxidteilchen zumindest teilweise mit einer Metallschicht überzogen ist, die aus dem Platin, dem Silber oder dem Rhodium ausgewählt ist.

8. Substrat (1) nach einem der vorangehenden Ansprüche, **dadurch gekennzeichnet, dass** der Überzug (3) zusätzliche Teilchen auf Basis von Kadmium, Zinn, Wolfram, Zink, Cerium oder Zirconium umfasst.

9. Substrat (1) nach einem der vorangehenden Ansprüche, **dadurch gekennzeichnet, dass** die Dicke des Überzugs (3) zwischen 5 nm und 100 nm inklusive ist.

10. Substrat (1) nach einem der vorangehenden Ansprüche, **dadurch gekennzeichnet, dass** unter dem Überzug (3) auf Titanoxidbasis mindestens eine dünne Schicht (2) angeordnet ist, die eine antistatische, thermische oder optische Funktion hat oder als Barriere gegen die Wandung der vom Substrat ausgehenden Alkalimetalle dient.

11. Substrat (1) nach vorangehendem Anspruch, **dadurch gekennzeichnet, dass** die dünne Schicht (2) mit antistatischer Funktion, gegebenenfalls mit kontrollierter Polarisation, und/der mit thermischer und/oder optischer Funktion auf Basis eines leitfähigen Materials inForm von Metall oder dotiertem Metalloxid vorliegt, wie zum Beispiel mit ITO-Zinn dotiertes indiumoxid, mit einem halogen des Fluortyps dotiertes Zinnoxid $SnO_2$:F, mit Indium dotiertes Zinkoxid ZnO:in, mit Fluor dotiertes Zinkoxid ZnO:F, mit Aluminium dotiertes Zinkoxid ZnO:Al oder mit Zinn dotiertes Zinkoxid ZnO:Sn.

12. Substrat (1) nach Anspruch 1.0, **dadurch gekennzeichnet, dass** der dünnen Schicht (2) mit optischer Funktion ein Oxid oder ein Oxidgemisch zugrunde liegt, dessen Brechungsindex zwischen dem des Überzugs (3) und dem des Substrats (1) liegt und insbesondere aus den folgenden Oxiden ausgewählt ist: $Al_2O_3$, $SnO_2$, $In_2O_3$, Silitiumoxycarbid oder-nitrid.

13. Substrat (1) nach Anspruch 10, **dadurch gekennzeichnet, dass** der dünnen Schicht (2), die als Barriere gegen die Alkalimetalle dient, ein Siliciumoxid, -nitrid, - oxinitrid oder -oxicrbid, ein Fluor enthaltendes Aluminiumoxid $Al_2O_3$:F oder ein Aluminiumnitrid zugrunde liegt,

14. Substrat (1) nach Anspruch 10, **dadurch gekennzeichnet, dass** der Überzug (3) die letzte Schicht eines Stapels von nicht reflektierenden Schichten bildet.

15. Monolithische mehrteilige Glasscheibe in Form einer Doppel- oder Verbundverglasung, die das Substrat (1) nach einem der vorangehenden Ansprüche enthält.

16. Verwendung des Substrats (1) nach einem der Ansprüche 1 bis 14 zur Herstellung von "selbstreinigenden", nicht beschlagenden und/oder schmutzabweisenden Fensterscheiben, insbesondere von Fensterscheiben für das Bauwesen in Form einer Doppelverglasung, von Fensterscheiben für Fahrzeuge in Form einer Windschutzscheibe, Heckscheibe oder Seitenscheibe von Kraftfahrzeugen, Eisenbahnen, Flugzeugen oder Mehrzweckfensterscheiben wie Gläser für Aquarien, Schaufenster, Gewächshäuser, Inneneinrichtungen, Stadtmobiliar oder Spiegel, Fernsehbildschirme, Fensterscheiben zur variablen elektrisch geregelten Absorption.

17. Verfahren zur Herstellung eines Substrats (1) nach einem der Ansprüche 1 bis 14, **dadurch gekennzeichnet, dass** der Überzug (3) durch Pyrolyse in flüssiger Phase ausgehend von einer Dispersion aufgebracht wird, die mindestens eine Organometallverbindung und Titandioxidteilchen umfasst, wobei die genannten Teilchen die Eigenschaften der im endgültigen Überzug (3) enthaltenen Teilchen aufweisen.

**18.** Verfahren zur Herstellung eines Substrats (1) nach einem der Ansprüche 1 bis 14, **dadurch gekennzeichnet, dass** der Überzug (3) durch einen Sol-Gel-Prozess mit einer Ablagerungsart in Form von Tauchen, "ceil-coating", Walzbeschichtung oder "spray-coating" aus einer Dispersion aufgebracht wird, die mindestens eine Organemetallverbindung und Titandioxidteilchen umfasst, wobei die genannten Teilchen die Eigenschaften der im endgültigen Überzug (3) enthaltenen Teilchen aufweisen.

**19.** Verfahren nach Anspruch 17 oder 18, **dadurch gekennzeichnet, dass** eine Dispersion verwendet wird, die derart ist, dass das Gewichtsverhältnis der Organometallverbindungen, die als Metalloxide ($MO_x$) definiert sind, zum Gewicht des durch die Teilchen eingebrachten $TiO_2$ und der Organometallverbindungen, die als Metalloxide ($MO_x$) definiert sind, zwischen 5 und 80% inklusive liegt.

**20.** Verfahren nach einem der Ansprüche 17 bis 19, **dadurch gekennzeichnet, dass** die Organometallverbindungen auf Basis von Titan oder Silicium sind.

**21.** Verfahren nach einem der Ansprüche 17 bis 20, **dadurch gekennzeichnet, dass** der Überzug (3) in mindestens zwei aufeinanderfolgenden Schritten aufgebracht wird.

**22.** Verfahren nach einem der Ansprüche 17 bis 21, **dadurch gekennzeichnet, dass** der Überzug (3) nach dem Aufbrngen mindestens einer thermischen Glühbehandlung unterzieht.

**23.** Organische Dispersion, **dadurch gekennzeichnet, dass** die umfasst:

- poröse Titandioxidteilchen mit einer Größe zwischen 5 und 80 nm inklusive, die monodispers und größtenteils anatasförmig kristallisiert sind,
- mindestens eine Organometallverbindung
- und mindestens ein organisches lösungsmittel, vorzugsweise mit einer latenten Verdarnpfungswärme, die geringer als die von Wasser ist.

**24.** Dispersion nach Anspruch 23, **dadurch gekennzeichnet, dass** das organische Lösungsmittel aus den Alkoholen und speziell den Glykolen und den Estern wie Essigsäureethylester ausgewählt ist.

**25.** Dispersion nach Anspruch 23 oder 24, **dadurch gekennzeichnet, dass** die Titandioxidteilchen aus einem Vorbereitungsverfahren in Lösung entstanden sind.

**26.** Dispersion nach Anspruch 25, **dadurch gekennzeichnet, dass** die Titandioxidteilchen aus dem Verfahren entstanden sind, das darin besteht, mindestens eine Titanverbindung A in Gegenwart mindestens einer Verbindung B zu hydrolysieren, die ausgewählt ist aus:

(i) den Säuren, die aufweisen:

- entweder eine Carboxygruppe und mindestens zwei Hydroxyl- und/oder Amingruppen,
- oder mindestens zwei Carboxylgruppen und mindestens eine Hydroxyl- und/oderAmingruppen,

(ii) den organischen Phosphorsäuren der folgenden Formen:

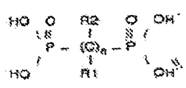

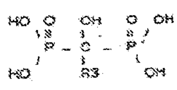

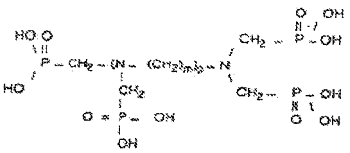

in denen n und m ganze Zahlen zwischen 1 und 6 inklusive sind, p eine ganze Zahl zwischen 0 und 5 inklusive st und die gleichen oder verschiedenen R1, R2, R3 eine Hydroxyl-, Amino-, Aralkyl-, Alkyl- oder Wasserstoffgruppe darstellen,

(iii) den Verbindungen, die imstande sind, Sulfationen im sauren Milieu freizusetzen

(iv) den Salzen der oben beschriebenen Säuren,

und in Gegenwart von Keimen von anatasförmigem Titandioxid, die eine Größe von höchstens 5 nm aufweisen und in einem Gewichtsverhältnis, das definiert ist als in den Keimen enthaltenes $TiO_2$/Titan, das vor Zugabe der Keime in das Hydrolysemilieu vorlag, definiert als $TiO_2$, zwischen 0,01 % und 3 % inklusive.

**27.** Dispersion nach einem der Ansprüche 23 bis 26, **dadurch gekennzeichnet, dass** sie auch mindestens eine Organometallverbindung auf Basis eines Metalls umfasst, das aus dem Titan, dem Silicium, dem Zinn, dem Zirconium oder dem Aluminium ausgewählt ist.

**28.** Dispersion nach Anspruch 27, **dadurch gekennzeichnet, dass** die Organometallverbindung eine Verbindung der allgemeinen Formel $M(OR)_4$ ist, in der M das Metall darstellt, das aus dem Titan, dem Silizium, dem Zinn, dem Zirconium oder dem Aluminium ausgewählt ist und R einen Alkyl-, Cycloalkyl-, Aryl, Alkylaryl- oder Arylalkyl-, Alkenyl- oder Alkynylrest oder einen Rest von Acetylacetonat oder einem seiner Derivate, einen Rest von Amin oder einem seiner Derivate oder ein Glykolat darstellt.

**29.** Dispersion nach einem der Ansprüche 23 bis 28, **dadurch gekennzeichnet, dass** das Verhältnis der Organometallverbindungen derart ist, dass das Verhältnis der Masse dieser Verbindungen, die definiert sind als Metalloxide ($MO_X$), zum Gewicht des durch die Teilchen eingebrachten $TiO_2$ und der Organometallverbindungen, die definiert sich als Metalloxide ($MO_X$), zwischen 5 und 80 % inklusive liegt.

**30.** Dispersion nach einem der Ansprüche 23 bis 29, **dadurch gekennzeichnet, dass** sie zusätzliche Teilchen auf Basis von metallischen Verbindungen enthält, die aus dem Kadmium, dem Zinn, dem Wolfram, dem Zink, dem Cerium oder dem Zirconium ausgewählt sind.

**31.** Dispersion nach einem der Ansprüche 23 bis 30, **dadurch gekennzeichnet, dass** zumindest ein Teil der in der Dispersion enthaltenen Titandioxidteilchen in ihrem Kristallgitter mit Metallionen dotiert ist, die aus dem Eisen, dem Kupfer, dem Ruthenium, dem Cerium, dem Molybdän, dem Bismut, dem Tantal, dem Niob, dem Kobalt, dem Nickel, dem Vanadium ausgewählt sind.

**32.** Dispersion nach einem der Ansprüche 23 bis 31, **dadurch gekennzeichnet, dass** zumindest ein Teil der in der Dispersion enthaltenen Titandioxidteilchen zumindest teilweise mit einer Oxidschicht oder einer Schicht aus metallischen Salzen überzogen ist, wobei das Metall aus dem Eisen, dem Kupfer, dem Ruthenium, dem Cerium, dem Molybdän, dem Bismut, dem Tantal, dem Niob, dem Kobalt, dem Nicken, dem Vanadium, dem Wolfram, dem Zinn, dem Zirconium, dem Kadmium, dem Zink ausgewählt ist.

**33.** Dispersion nach einem der Ansprüche 22 bis 32, **dadurch gekennzeichnet, dass** zumindest ein Teil der in der Dispersion enthaltenen Titandioxidteilchen zumindest teilweise mit einem Katalysator bedeckt ist, insbesondere mit einer Metallschicht, die aus dem Platin, dem Silber oder dem Rhodium ausgewählt ist.

**34.** Verwendung einer Dispersion nach einem der Ansprüche 23 bis 33 in einem Verfahren nach einem der Ansprüche 17 bis 22.

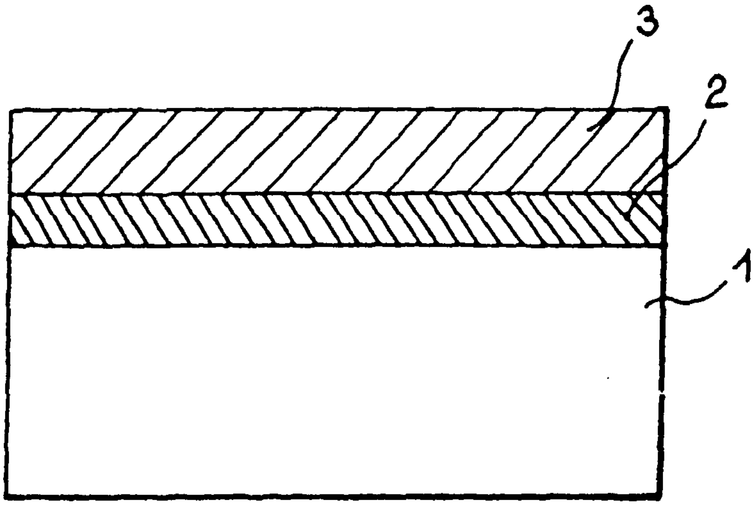


FIG_1

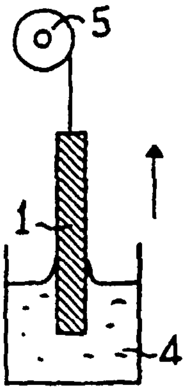


FIG_2

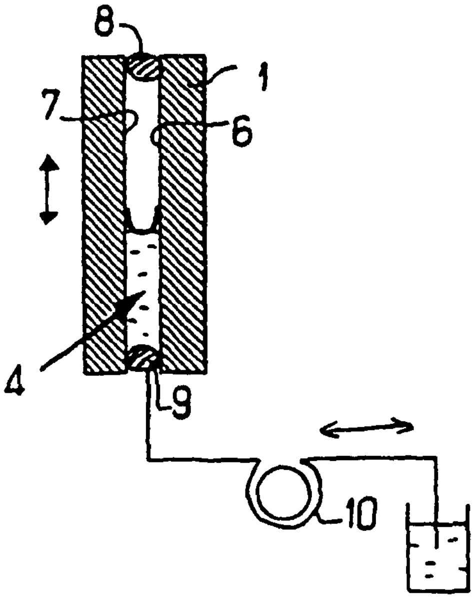


FIG_3

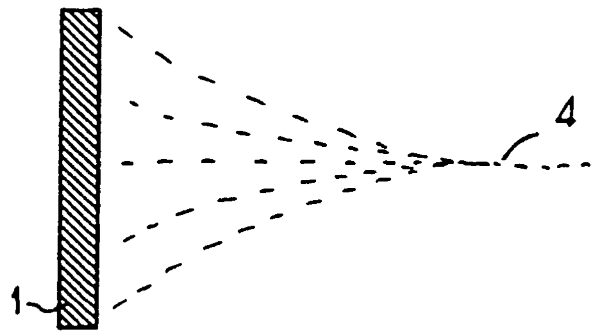


FIG_4

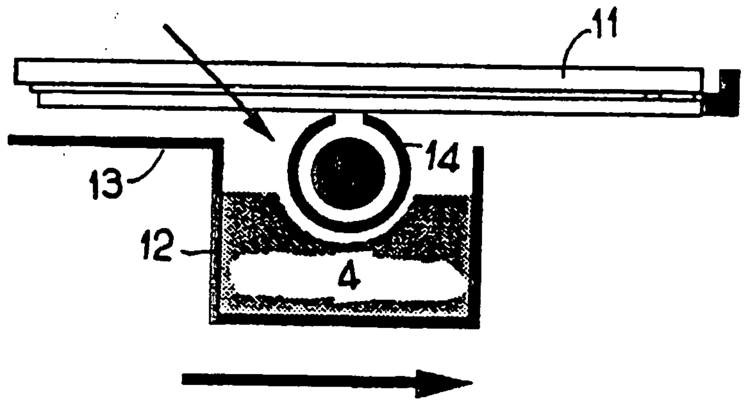


FIG_5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5368892 A
- US 5389427 A
- FR 2310977 A
- EP 0335773 A
- EP 0648196 A
- EP 0518755 A